# EUROPÄISCHE PATENTSCHRIFT

(11) **EP 2 595 878 B1**
(45) Veröffentlichungstag und Bekanntmachung des Hinweises auf die Patenterteilung: **03.05.2017**
(21) Anmeldenummer: 11748566.4
(22) Anmeldetag: 20.07.2011
(51) Int. Cl.: B64C 1/12, B64C 3/26, B32B 3/08, B32B 5/18

(54) **HAUPTLAST-TRAGENDE BEPLANKUNGSSCHALE SOWIE STRUKTURBAUTEIL UND STRÖMUNGSKÖRPER MIT EINER SOLCHEN HAUPTLAST-TRAGENDEN BEPLANKUNGSSCHALE**
MAIN-LOAD-BEARING PLANKING SHELL AND STRUCTURAL COMPONENT AND FLOW BODY COMPRISING SUCH A MAIN-LOAD-BEARING PLANKING SHELL
PANNEAU DE REVÊTEMENT SUPPORTANT LA CHARGE PRINCIPALE, ÉLÉMENT DE STRUCTURE ET CORPS D'ÉCOULEMENT COMPORTANT UN TEL PANNEAU DE REVÊTEMENT SUPPORTANT LA CHARGE PRINCIPALE

(30) Priorität: 20.07.2010 US 365863 P; 20.07.2010 US 365873 P; 20.07.2010 US 365882 P; 20.07.2010 US 365857 P; 20.07.2010 DE 102010031690; 20.07.2010 DE 102010031688; 20.07.2010 DE 102010027695; 20.07.2010 DE 102010027696
(43) Veröffentlichungstag der Anmeldung: 29.05.2013
(73) Patentinhaber: Airbus Operations GmbH, 21129 Hamburg (DE)
(72) Erfinder: ZUARDY, Ichwan, 21073 HAMBURG (DE); ZAHLEN, Pierre, 21680 Stade (DE); HERRMANN, Axel, Siegfried, 21684 STADE (DE)
(74) Vertreter: Bird & Bird LLP
(86) Internationale Anmeldenummer: PCT/EP2011/003643
(87) Internationale Veröffentlichungsnummer: WO 2012/010306

(56) Entgegenhaltungen:
- CN-Y- 201 254 685
- DE-A1- 2 132 446
- US-A- 5 869 165
- US-A- 5 958 550
- US-A1- 2006 188 696

## Beschreibung

Die Erfindung betrifft eine hauptlast-tragende Beplankungsschale sowie ein Strukturbauteil mit zumindest einer solchen hauptlast-tragende Beplankungsschale und Strömungskörper mit einer solchen hauptlast-tragenden Beplankungsschale.

Aus der US 6,291,049 wie auch aus der US 5,869,165 und der US 5958,550 ist eine Beplankungsplatte in einer Sandwichbauweise bekannt, in die pinförmige Verstärkungselemente zur Stabilisierung der Beplankungsplatte eingefügt sind.

Aus der US 2006/0188696, die als nächstliegender Stand der Technik angesehen wird, ist eine Beplankungsschale gemäß dem Oberbegriff des Anspruchs 1 bekannt.

Aufgabe der Erfindung ist, eine hauptlast-tragende Beplankungsschale bereitzustellen, die in verbesserter Weise schadenstolerant gebildet und als schadenstoleranter Bestandteil eines Strukturbauteils und/oder Strömungskörpers verwendet werden kann.

Aufgabe der Erfindung ist weiterhin, eine hauptlast-tragende Beplankungsschale und ein Strukturbauteil mit zumindest einer hauptlast-tragenden Beplankungsschale sowie einen Strömungskörper mit einer solchen hauptlast-tragenden Beplankungsschale bereitzustellen, die bzw. das bzw. der schadenstolerant gestaltet und geeignet ist, bei geringem eigenen Gewicht große Spannungen aufzunehmen.

Diese Aufgaben werden mit den Merkmalen des Anspruchs 1 gelöst. Weitere Ausführungsformen sind in den auf diese jeweils rückbezogenen Unteransprüchen angegeben.

Nach einem Aspekt der Erfindung ist eine hauptlast-tragende Beplankungsschale für ein Strukturbauteil vorgesehen, die in ihrem sich flächig erstreckenden Innenbereich als Sandwich-Bauteil und aus einem inneren Hautabschnitt, einem äußeren Hautabschnitt sowie einer zwischen diesen gelegenen schublast-aufnehmenden Kernschicht gebildet ist. Insbesondere verbindet die schublast-aufnehmende Kernschicht den inneren und den äußeren Hautabschnitt flächig miteinander. Die Beplankungsschale ist zum Anbringen derselben an ein Träger-Bauteil mit einem äußeren Randabschnitt mit einem äußeren Rand und mit einem entlang des Rands verlaufenden Anschlussbereich mit dem inneren Hautabschnitt und dem äußeren Hautabschnitt ausgebildet, wobei die schublast-aufnehmenden Kernschicht sich bis vor den äußeren Randabschnitt erstreckt. In einem Kernschicht-Endbereich innerhalb des Innenbereichs entlang des äußeren Randabschnitts der Beplankungsschale ist eine Mehrzahl von Verstärkungsteilen und/oder Verstärkungs-Vorrichtungen integriert, die jeweils zumindest 85 % der schublast-aufnehmenden Kernschicht in deren Dickenrichtung durchragen, um die Rissfestigkeit der Beplankungsschale in dem äußeren Randabschnitt zu verbessern. Dabei ist erfindungsgemäß vorgesehen, dass der Anschlussbereich des äußeren Randabschnitts als entlang des Rands verlaufender kernschichtfreie Anschlussbereich mit dem inneren Hautabschnitt und dem äußeren Hautabschnitt ausgebildet ist, in dem der innere Hautabschnitt und der äußere Hautabschnitt aufeinander liegen. Die Verstärkungsteile und/oder Verstärkungs-Vorrichtungen können als längliche und z. B. pin- oder nadelförmige Verstärkungsteile ausgeführt sein.

Bei den erfindungsgemäßen Ausführungsformen, bei denen Verstärkungsteile vorgesehen sind, kann grundsätzlich vorgesehen sein, dass die oder ein Teil der Verstärkungsteile in der Beplankungsschale in jeweils in einem Volumenteil der Beplankungsschale gelegenen Gruppen von Verstärkungs-Vorrichtungen angeordnet sind, wobei die Volumenteile entlang einer Referenz-Längsrichtung oder der Rippen-Längsrichtung hintereinander angeordnet sind, wobei jede Gruppe eines Volumenteils jeweils aus einer Kombination von zumindest zwei Verstärkungsteilen gebildet ist, deren Ausrichtungen jeweils maximal 30 Grad von der Dickenrichtung der Beplankungsschale abweichen und die in regelmäßiger oder unregelmäßiger Weise um eine Mittelachse des Volumenteils herum angeordnet sind. Das Volumenteil ist ein zur Veranschaulichung der Anordnung von Verstärkungsteilen gewähltes fiktives Volumenteil der Beplankungsschale, das sich über die gesamte Dicke derselben erstreckt und insbesondere als Quader geformt ist. In diesem Fall kann insbesondere die Mittelachse des Volumenteils die in der Dickenrichtung der Beplankungsschale verlaufende und die Querschnittsflächen-Schwerpunkte des Quaders verbindende Mittelachse oder Symmetrieachse sein.

Unter "Beplankungsschale" wird hierin generell ein Schalenteil verstanden, das erfindungsgemäß als Sandwichschale ausgeführt ist, und gekrümmt oder nicht gekrümmt sein kann.

Generell kann der Anschlussbereich ein Bereich der Beplankungsschale sine, an dem insbesondere Rippenverstärkungsprofile zum Stützten der Beplankungsschale angebracht sind oder mit der die Beplankungsschale an einem Trägerbauteil angebracht ist.

Nach einem weiteren Aspekt der Erfindung ist eine hauptlast-tragende Beplankungsschale für ein Strukturbauteil vorgesehen, die in ihrem sich flächig erstreckenden Innenbereich als Sandwich-Bauteil und aus einem inneren Hautabschnitt, einem äußeren Hautabschnitt sowie einer zwischen diesen gelegenen schublast-aufnehmenden Kernschicht gebildet ist, der den inneren und den äußeren Hautabschnitt flächig miteinander verbindet. Die Beplankungsschale ist zum Anbringen derselben an ein Träger-Bauteil mit einem äußeren Randabschnitt mit einem äußeren Rand ausgebildet und weist auf: einen entlang des Rands verlaufenden kernschichtfreien Anschlussbereich mit dem inneren Hautabschnitt, dem äußeren Hautabschnitt und einer monolithischen Zwischenschicht. Dabei können in einem Kernschicht-Endbereich entlang des äußeren Randabschnitts der Beplankungsschale Verstärkungsteilen und/oder Verstärkungs-Vorrichtungen integriert sein, die die schublast-aufnehmende Kernschicht durchragen. Die Verstärkungsteilen bzw. die Verstärkungs-Vorrichtungen können als längliche und z. B. pin- oder nadelförmige Verstärkungsteile ausgeführt sein. Weiterhin kann insbesondere vorgesehen sein, dass in dem äußeren Randabschnitt ein Übergangsbereich vorgesehen ist, in dem sich die Dicke der monolithischen Zwischenschicht in Richtung zum äußeren Rand zur Verringerung der Querschnittsdicke der Beplankungsschale verringert.

Weiterhin kann dabei insbesondere vorgesehen sein, dass von dem Innenbereich aus gesehen vor dem kernschichtfreien Anschlussbereich ein Zwischenbereich vorgesehen ist, in dem sich die Dicke der schublast-aufnehmenden Kernschicht in Richtung zu dessen Rand kontinuierlich verringert unter Ausbildung eines im Querschnitt gesehen keilförmigen Abschnitts der monolithischen Zwischenschicht zumindest zwischen der dem äußeren Hautabschnitt zugewandten Seite der schublast-aufnehmenden Kernschicht und dem äußeren Hautabschnitt und/oder zwischen der dem inneren Hautabschnitt zugewandten Seite der schublast-aufnehmenden Kernschicht und dem inneren Hautabschnitt.

Bei den erfindungsgemäß vorgesehenen Ausführungsformen kann generell vorgesehen sein, dass in den Kernschicht-Endbereich entlang des äußeren Randabschnitts der Beplankungsschale Verstärkungsteile und/oder Verstärkungs-Vorrichtungen integriert sind, die die schublastaufnehmende Kernschicht verstärken. Die Verstärkungs-Vorrichtungen können als längliche und z. B. pin- oder nadelförmige Verstärkungsteile ausgeführt sein. Weiterhin können die Verstärkungsteile und/oder Verstärkungs-Vorrichtungen zumindest 85 % der schublast-aufnehmenden Kernschicht in deren Dickenrichtung durchragen und somit verstärken, um die Rissfestigkeit der Beplankungsschale in dem äußeren Randabschnitt zu verbessern. Auch können dabei die Verstärkungsteile der Verstärkungs-Vorrichtungen teilweise die beiden keilförmigen Abschnitte der monolithischen Zwischenschicht durchragen. Nach einem Ausführungsbeispiel der Erfindung kann sich der Kernschicht-Endbereich für die Anordnung der Verstärkungsteile und/oder Verstärkungs-Vorrichtungen von dem Rand der Kernschicht-Endes aus bis zu einer Entfernung von maximal der zwehnfachen Dicke der Beplankungsschale am Rand des Kernschicht-Endes erstrecken.

Bei den erfindungsgemäßen Ausführungsformen, bei denen Verstärkungsteile vorgesehen sind, kann grundsätzlich vorgesehen sein, dass die oder ein Teil der Verstärkungsteile in der Beplankungsschale in jeweils in einem Volumenteil der Beplankungsschale gelegenen Gruppen von Verstärkungsteilen als Verstärkungs-Vorrichtungen angeordnet sind, wobei die Volumenteile entlang einer Referenz-Längsrichtung oder der Rippen-Längsrichtung hintereinander angeordnet sind, wobei jede Gruppe eines Volumenteils jeweils aus einer Kombination von zumindest zwei Verstärkungsteilen gebildet ist, deren Ausrichtungen jeweils maximal 30 Grad von der Dickenrichtung der Beplankungsschale abweichen und die in regelmäßiger oder unregelmäßiger Weise um eine Mittelachse des Volumenteils herum angeordnet sind. Das Volumenteil ist ein zur Veranschaulichung der Anordnung von Verstärkungsteilen gewähltes fiktives Volumenteil der Beplankungsschale, das sich über die gesamte Dicke derselben erstreckt und insbesondere als Quader geformt ist. In diesem Fall kann insbesondere die Mittelachse des Volumenteils die in der Dickenrichtung der Beplankungsschale verlaufende und die Querschnittsflächen-Schwerpunkte des Quaders verbindende Mittelachse oder Symmetrieachse sein. Bei den erfindungsgemäßen Ausführungsformen kann insbesondere vorgesehen sein, dass die Verstärkungsteile gruppenweise in jeweils einem Volumenteil der Beplankungsschale in dem Kernschicht-Endbereich hintereinander angeordnet sind. Das "Volumenteil" ist nicht als eigenes Volumenteil, sondern als zusammenhängender Raumbereich innerhalb der Beplankungsschale zu verstehen. Es kann als insgesamt eine Gruppe oder können mehrere Gruppen von Verstärkungs-Vorrichtungen in einem solchen Volumenteil bzw. in entsprechenden von mehreren Volumenteilen angeordnet sein. In jedem solchen Volumenteil ist jeweils eine Kombination von zumindest zwei Verstärkungsteilen angeordnet. Diese Gruppen von zumindest zwei Verstärkungsteilen sind in einer Strukturbauteil-Längsrichtung hintereinander angeordnet. Insbesondere haben die Verstärkungs-Vorrichtungen jeweils mit einer Abweichung von maximal 30 Grad und in bevorzugte Anwendungsfällen maximal 15 Grad dieselbe Orientierung relativ zur Dickenrichtung der Beplankungsschale und sind deie Ausrichtungen der Verstärkungsteile relativ zu den weiteren Koordinatenrichtungen der Beplankungsschale zyklisch vorgesehen.

Nach einer Ausführungsform der Erfindung ist in dem Kernschicht-Endbereich der Beplankungsschale eine Mehrzahl von Volumenteilen mit einer Gruppe von Verstärkungsteilen entlang zumindest eines Bereichs des äußeren Randabschnitts hintereinander angeordnet.

Bei den erfindungsgemäßen Ausführungsformen kann auch vorgesehen sein, dass die Ausrichtung der Verstärkungsteile innerhalb eines jeweiligen Volumenteils kann dabei insbesondere derart vorgesehen sein, dass der Winkel zwischen der Längsrichtung des jeweiligen Verstärkungsteils und der Dickenrichtung der Beplankungsschale an dieser Stelle zwischen 45 Grad und 10 Grad beträgt.

Bei der erfindungsgemäßen hauptlast-tragenden Beplankungsschale kann vorgesehen sein, dass die zumindest ein Teil der Verstärkungsteile und/oder Verstärkungs-Vorrichtungen in der Rippenanordnungs-Längsrichtung hintereinander angeordnet sind und jeweils aus einem Paaren von Verstärkungsteilen gebildet sind, wobei die Verstärkungsteile von denen jedes Paares von Verstärkungsteilen in Richtung der Längserstreckung des äußeren Randabschnitts der Beplankungsschale gesehen derart zueinander orientiert sind, so dass die Verstärkungsteile zueinander eine in einer Längserstreckung der Beplankungsschale gesehen X-förmige Verstärkungsvorrichtung bilden. Zumindest ein Teil der Verstärkungsteile kann oder einige der Verstärkungsteile können generell zumindest teilweise pinförmig nadelförmig gestaltet sein.

Nach der Erfindung kann generell die schublast-aufnehmende Kernschicht in dem Kernschicht-Endbereich aus einem Schaum gebildet sein.

Nach einer weiteren Ausführungsform der erfindungsgemäßen hauptlast-tragenden Beplankungsschale weist die schublast-aufnehmende Kernschicht zumindest einen Verstärkungsbereich auf, der entlang des äußeren Randabschnitts der Beplankungsschale oder in einer Strukturbauteil-Längsrichtung verläuft und sich quer zur Längserstreckung der schublastaufnehmenden Kernschicht durch diese hindurch erstreckt. Dabei ist der Verstärkungsbereich insbesondere aus einem Material gebildet, das eine mindestens zweifache Steifigkeit aufweist wie die schublast-aufnehmende Kernschicht. Insbesondere weist die Kernschicht eine Mehrzahl von Verstärkungsbereichen auf, die einzelne Kernschicht-Platten miteinander verbinden. Diese können zur Verbesserung der Festigkeit der Beplankungsschale und/oder aus fertigungstechnischen Gründen bei der Herstellung der Kernschicht aus Kernschicht-Teilplatten, die mittels Verstärkungsbereichen an deren Stoßseiten miteinander verbunden sind, vorgesehen sein. Der jeweilige Verstärkungsbereich kann insbesondere aus Harz gebildet sein.

Bei der hauptlast-tragenden Beplankungsschale nach der Erfindung können mehrere Verstärkungsteile einen oder mehrere Verstärkungsbereiche jeweils zumindest teilweise durchragen. Nach einer weiteren Ausführungsform ist vorgesehen, dass Verstärkungsteile mit einem Ende in den Verstärkungsbereich eingesetzt sind und sich mit ihrem übrigen Bereich in der schublast-aufnehmende Kernschicht erstrecken.

Erfindungsgemäß ist eine hauptlast-tragende Beplankungsschale für ein Strukturbauteil und insbesondere einen Strömungskörper vorgesehen. Nach einem weiteren Aspekt ist erfindungsgemäß ein Strukturbauteil mit einer hauptlast-tragenden Beplankungsschale nach der Erfindung und ein Strömungskörper mit einem Strukturbauteil nach der Erfindung vorgesehen.

Nach einem Ausführungsbeispiel ist vorgesehen, dass die Verstärkungs-Vorrichtungen in der Rippenanordnungs-Längsrichtung gesehen hintereinander angeordnet sind und jeweils aus einem Paar von Verstärkungsteilen gebildet sind, wobei die Verstärkungsteile jedes Paares von Verstärkungsteilen derart zueinander orientiert sind, dass die Verstärkungsteile zueinander eine in einer Längserstreckung der Beplankungsschale gesehen X-förmige Verstärkungsvorrichtung bilden.

Die Verstärkungsteile zumindest teilweise pinförmig gestaltet sein. Alternativ oder zusätzlich können Verstärkungsteile plattenförmig gestaltet sein. Dabei können die plattenförmigen Verstärkungsteile einer Verstärkungs-Vorrichtung ineinander greifend angeordnet sein.

Nach einem weiteren Aspekt der Erfindung ist ein Strukturbauteil mit zumindest einer hauptlast-tragenden oder haupt-tragenden Beplankungsschale nach einer beschriebenen Ausführungsform und zusätzlich einer Trägerstruktur zur Befestigung der Beplankungsschale vorgesehen. Die erfindungsgemäß vorgesehene Beplankungsschale ist als Sandwich und aus einem inneren Hautabschnitt, einem äußeren Hautabschnitt sowie einer zwischen diesen gelegenen schublastaufnehmenden Kernschicht gebildet, die insbesondere den inneren und den äußeren Hautabschnitt flächig miteinander verbindet. Die Trägerstruktur ist zusätzlich aus zumindest zwei jeweils entlang einer Längsrichtung des Strukturbauteils verlaufenden Trägerbauteilen und zumindest einer zwischen und quer zu diesen verlaufenden und entlang ihrer Längsrichtung mit der Beplankungsschale verbundenen Rippen-Anordnung zur flächigen Abstützung der Beplankungsschale an der Trägerstruktur gebildet. Insbesondere ist vorgesehen, dass das Anschlussteil zur Abstützung der Beplankungsschale an der Trägerstruktur in der Dickenrichtung der Beplankungsschale gesehen außerhalb der Beplankungsschale gelegen und flächig an dem inneren Hautabschnitt anliegend an diesem befestigt ist. Dabei ist insbesondere vorgesehen, dass der wenigstens eine Profilträger in der Draufsicht auf die flächige Erstreckung der Beplankungsschale gesehen innerhalb des Anschlussbereichs angeordnet ist. Die Rippen-Anordnung weist dabei auf: eine von der Beplankungsschale in seiner Querrichtung abstehende Rippe und ein daran anschließendes Flanschteil, das entlang der Rippenanordnungs-Längsrichtung flächig mit der Beplankungsschale verbunden ist. Erfindungsgemäß sind in der Beplankungsschale entlang eines quer zur Rippenanordnungs-Längsrichtung verlaufenden Beplankungsschalen-Abschnitts Verstärkungsprofile oder Verstärkungsvorrichtungen nach der Erfindung angeordnet, die das Flanschteil und den äußeren Hautabschnitt zur Stabilisierung der Beplankungsschale bei Beschädigung derselben von außen miteinander verbinden. Weiterhin sind an zwei Zwischenbereichen oder Verstärkungsbereichen, die in Rippenanordnungs-Längsrichtung und entlang der seitlichen Enden des Beplankungsschalen-Abschnitts verlaufen, Verstärkungsteile und/oder Verstärkungs-Vorrichtungen integriert. Diese sind generell nach einer Ausführungsform wie für den entlang des Randabschnitts mit dem Anschlussbereich verlaufenden Kernschicht-Endbereich vorgesehen und insbesondere mit die Kernschicht teilweise oder ganz durchragenden Verstärkungsteilen ausgeführt, wobei die Verstärkungsteile und/oder Verstärkungs-Vorrichtungen zumindest abschnittsweise entlang der Rippenanordnungs-Längsrichtung, d.h. in der Rippenanordnungs-Längsrichtung hintereinander liegend angeordnet sind. Die Verstärkungsteile und/oder Verstärkungs-Vorrichtungen sind also in der Beplankungsschale entlang einer Längsrichtung derselben eingebracht und können dabei auch zusätzlich quer zu dieser Längsrichtung nebeneinander angeordnet sein.

Ein Vorteil der erfindungsgemäßen Lösung mit der Befestigung des Anschlussteils an der Beplankungsschale derart, dass das Anschlussteil außerhalb der Beplankungsschale gelegen und flächig an dem inneren Hautabschnitt anliegt, ist, dass der innere wie auch der äußere Hautabschnitt unversehrt bleibt. Dies ermöglicht eine Herstellung der Beplankungsschale mit durchgehenden inneren und äußeren Hautabschnitten, was wiederum die Herstellung der Beplankungsschale mit einem Harzinfusions- oder Nassverfahren (Liquid Composite Molding) möglich macht.

Dabei kann das Anschlussteil zur Befestigung desselben mit der Beplankungsschale flächig mit dem inneren Hautabschnitt verklebt sein, so dass das Anschlussteil aufgrund der flächig durch die Klebeverbindung bereitgestellten Klebekraft an der Beplankungsschale gehalten wird. Zusätzlich oder alternativ dazu kann das Anschlussteil mit der Beplankungsschale mit dem inneren Hautabschnitt mittels Verbindungselementen wie insbesondere Nieten (Blindniete, Passniete, etc.) verbunden sein, die insbesondere in wenigstens zwei entlang einander oder zueinander parallel verlaufenden Reihen in regelmäßigen Abständen voneinander befestigt sein können.

Im Anschlussbereich kann insbesondere vorgesehen sein, dass der innere Hautabschnitt, an dem das Anschlussteil anliegt, eine größere Materialdicke aufweist, als der innere Hautabschnitt seitlich des Anschlussbereichs. Nach einer Ausführungsform der Erfindung kann diese Verdickung in Bezug auf dessen flächiger Erstreckung in einem Bereich sein, der um maximal das 10fache der Dicke der Beplankungsschale von dem Randverlauf des Anschlussbereichs abweicht. Diese Dickenvergrößerung kann durch das Anordnen weiterer Schichten in diesem sich flächig erstreckenden Bereich auf die der Kernschicht und/oder auf die der Außenseite der Beplankungsschale zugewandte Oberfläche des inneren Hautabschnitts realisiert sein.

Nach einer Ausführungsform des erfindungsgemäßen Strukturbauteils ist vorgesehen, dass im Anschlussbereich des plattenförmigen Anschlussteils entlang der Referenz-Längsrichtung eine Mehrzahl von Verstärkungsteilen integriert ist.

Nach einer Ausführungsform des erfindungsgemäßen Strukturbauteils ist vorgesehen, dass zumindest einige der Verstärkungs-Teile derart in der Kernschicht angeordnet ist, dass deren Enden den inneren Hautabschnitt und/oder den äußeren Hautabschnitt jeweils zumindest teilweise durchragen, wobei insbesondere der innere Hautabschnitt und der äußere Hautabschnitt jeweils aus mehreren Lagen gebildet ist und wenigstens ein Teil der Verstärkungsteile zumindest eine erste Lage durchdringen.

Nach einem weiteren Aspekt der Erfindung ist ein Strukturbauteil mit zumindest einer hauptlast-tragenden Beplankungsschale und einer Trägerstruktur zur Befestigung der Beplankungsschale vorgesehen, wobei die Beplankungsschale als Sandwich und aus einem inneren Hautabschnitt, einem äußeren Hautabschnitt sowie einer zwischen diesen gelegenen schublast-aufnehmenden Kernschicht gebildet ist, die den inneren und den äußeren Hautabschnitt flächig miteinander verbindet, wobei die Trägerstruktur aus zumindest einem zwischen und quer zu diesen verlaufenden und entlang einer Referenz-Längsrichtung mit der Beplankungsschale verbundenen plattenförmigen Anschlussteil gebildet ist, das zur Abstützung der Beplankungsschale an der Trägerstruktur außerhalb der Trägerstruktur gelegen und flächig an dem inneren Hautabschnitt anliegend an diesem befestigt ist. Dabei ist im Anschlussbereich des plattenförmigen Anschlussteils entlang der Referenz-Längsrichtung eine Mehrzahl von Verstärkungsteilen integriert. Auch sind wenigstens einige der Verstärkungs-Teile derart in der Kernschicht angeordnet, dass deren Enden den inneren Hautabschnitt und/oder den äußeren Hautabschnitt jeweils zumindest teilweise durchragen.

Ein Vorteil der erfindungsgemäßen Lösung mit der Befestigung des Anschlussteils an der Beplankungsschale derart, dass das Anschlussteil außerhalb der Beplankungsschale gelegen und flächig an dem inneren Hautabschnitt anliegt, ist, dass der innere wie auch der äußere Hautabschnitt unversehrt bleibt. Dies ermöglicht eine Herstellung der Beplankungsschale mit durchgehenden inneren und äußeren Hautabschnitten, was wiederum die Herstellung der Beplankungsschale mit einem Harzinfusions- oder Nassverfahren (Liquid Composite Molding) möglich macht.

Dabei kann das Anschlussteil zur Befestigung desselben mit der Beplankungsschale flächig mit dem inneren Hautabschnitt verklebt sein. Zusätzlich oder alternativ dazu kann das Anschlussteil mit der Beplankungsschale mit dem inneren Hautabschnitt mittels Verbindungselementen wie insbesondere Nieten verbunden sein, die insbesondere in wenigstens zwei entlang einander oder zueinander parallel verlaufenden Reihen in regelmäßigen Abständen voneinander befestigt sein können.

Im Anschlussbereich kann insbesondere vorgesehen sein, dass der innere Hautabschnitt, an dem das Anschlussteil anliegt, eine größere Materialdicke aufweist, als der innere Hautabschnitt seitlich des Anschlussbereichs. Nach einer Ausführungsform der Erfindung kann diese Verdickung in Bezug auf dessen flächiger Erstreckung in einem Bereich sein, der um maximal das 10fache der Dicke der Beplankungsschale von dem Randverlauf des Anschlussbereichs abweicht. Diese Dickenvergrößerung kann durch das Anordnen weiterer Schichten in diesem sich flächig erstreckenden Bereich auf die der Kernschicht und/oder auf die der Außenseite der Beplankungsschale zugewandte Oberfläche des inneren Hautabschnitts realisiert sein.

Nach einer Ausführungsform des erfindungsgemäßen Strukturbauteils ist vorgesehen, dass der innere Hautabschnitt und der äußere Hautabschnitt jeweils aus mehreren Lagen gebildet ist, wobei die Verstärkungs-Teile zumindest eine erste Lage des inneren Hautabschnitts und des äußeren Hautabschnitts durchdringen.

Nach einer Ausführungsform des erfindungsgemäßen Strukturbauteils ist vorgesehen, dass in der Beplankungsschale zumindest ein entlang der Referenz-Längsrichtung verlaufender Profilträger zur Ausbildung eines Verstärkungs-Abschnitts im Anschlussbereich des plattenförmigen Anschlussteils angeordnet ist, der mit dem inneren Hautabschnitt und dem äußeren Hautabschnitt zur Stabilisierung der Beplankungsschale bei Beschädigung derselben verbunden ist und dadurch von außen gegenseitig abstützt.

Die schublastaufnehmende Kernschicht kann den Kernschicht-Verstärkungsbereich aufweisen, der sich abschnittsweise in Richtungen quer zur Längserstreckung der schublastaufnehmenden Kernschicht durch diese hindurch erstreckt, wobei der Verstärkungsbereich aus einem Material gebildet ist, das eine mindestens zweifache Steifigkeit aufweist als die schublastaufnehmende Kernschicht. Der Kernschicht-Verstärkungsbereich kann insbesondere aus Harz und z. B. aus Epoxharz gebildet sein. Das Strukturbauteil kann derart gestaltet sein, dass mehrere der Verstärkungsteile den Kernschicht-Verstärkungsbereich jeweils durchragen.

Nach der Erfindung ist auch ein Strömungskörper mit einem Strukturbauteil vorgesehen, wobei das Strukturbauteil als hauptlast-tragendes Strukturteil und nach einem der voranstehend genannten Ausführungsformen ausgebildet ist.

Nach einem weiteren Aspekt der Erfindung ist die erfindugnsgemäß vorgesehene hauptlast-tragende Beplankungsschale als Sandwich und aus einem inneren Hautabschnitt, einem äußeren Hautabschnitt sowie eine zwischen diesen gelegenen schublast-aufnehmende Kernschicht gebildet, wobei insbesondere die schublastaufnehmende Kernschicht den inneren und den äußeren Hautabschnitt flächig miteinander verbindet. Dabei kann generell die schublast-aufnehmende Kernschicht zumindest abschnittsweise aus mehreren in der Längserstreckung der Schaumschicht nebeneinander angeordneten Kernschicht-Abschnitten gebildet sein, die jeweils an den einander anliegenden Seiten durch einen Kernschicht-Verstärkungsbereich miteinander verbunden sind, der sich quer zur Längserstreckung der Kernschicht durch diese hindurch erstreckt. Dabei kann der Kernschicht-Verstärkungsbereich aus Harz gebildet sein.

Dabei kann inbesondere vorgesehen sein, dass entlang eines Umgebungsbereichs des Kernschicht-Verstärkungsbereichs eine Mehrzahl von Kernschicht-Verstärkungsbereichen in der schublast-aufnehmenden Kernschicht der Beplankungsschale Verstärkungs-Vorrichtungen integriert sind. Dabei kann sich der Umgebungsbereich für die Anordnung der Verstärkungs-Vorrichtungen auf beiden Seiten des Kernschicht-Verstärkungsbereichs bis zu einer Entfernung von maximal der zehnfachen und besonders bevorzugt bis zur doppelten Dicke der Beplankungsschale an der jeweiligen Stelle des Kernschicht-Verstärkungsbereichs erstrecken. Erfindungsgemäß kann vorgesehen sein, dass mehrere Verstärkungsteile den Verstärkungsbereich jeweils zumindest teilweise durchragen. Erfindungsgemäß kann auch vorgesehen sein, dass Verstärkungsteile mit einem Ende in den Verstärkungsbereich eingesetzt sind und sich mit ihrem übrigen Bereich in der schublast-aufnehmenden Kernschicht erstrecken.

Dabei kann insbesondere vorgesehen sein, dass die Verstärkungsteile und/oder Verstärkungs-Vorrichtungen in der Längsrichtung des Kernschicht-Verstärkungsbereichs als Referenz-Längsrichtung hintereinander angeordnet sind. Zusätzlich können Verstärkungsteile und/oder Verstärkungs-Vorrichtungen in dieser Hinsicht nebeneinander, also auch quer zur Referenz-Längsrichtung hintereinander angeordnet sein. Insbesondere kann vorgesehen sein, dass die schublastaufnehmende Kernschicht aus plattenförmigen Kernschicht-Abschnitten gebildet ist und der Verstärkungsbereich zwischen den Kernschicht-Abschnitten zur Verbindung derselben verläuft. Hinsichtlich der Anordnung der Verstärkungs-Vorrichtungen relativ zu den Verstärkungsbereichen kann insbesondere vorgesehen sein, dass ein Teil der Verstärkungsteile und/oder Verstärkungs-Vorrichtungen oder dass in einem Abschnitt der Beplankungsschale die Verstärkungs-Vorrichtungen gruppenweise angeordnet sind, wobei diese insgesamt eine Gruppe oder mehrere Gruppen bilden können, die in einem vorzugsweise zusammenhängenden Volumenteil der Beplankungsschale in dem betreffenden Abschnitt der Kernschicht angeordnet sind. Die Gruppen von Verstärkungs-Vorrichtungen sind also in der Beplankungsschale entlang einer Längsrichtung derselben eingebracht und können dabei auch zusätzlich quer zu dieser Längsrichtung nebeneinander angeordnet sein. Dabei ist jede Gruppe eines Volumenteils jeweils aus einer Kombination von zumindest zwei Verstärkungsteilen gebildet, die jeweils mit einer Abweichung von maximal 30 Grad dieselbe Orientierung relativ zur Dickenrichtung der Beplankungsschale haben und deren Ausrichtungen relativ zu den weiteren Koordinatenrichtungen der Beplankungsschale zyklisch vorgesehen sind.

Die Verstärkungs-Vorrichtungen können insbesondere in der Längsrichtung des Kernschicht-Verstärkungsbereichs hintereinander angeordnet und jeweils aus einem Paar von Verstärkungsteilen gebildet sein, wobei die Verstärkungsteile jedes Paares von Verstärkungsteilen derart zueinander orientiert sind, so dass die Verstärkungsteile zueinander eine in einer Längserstreckung der Beplankungsschale gesehen X-förmige Verstärkungsvorrichtung bilden. Die Verstärkungs-Vorrichtungen können zumindest teilweise pinförmig oder nadelförmig gestaltet sein. Auch kann vorgesehen sein, dass mehrere der Verstärkungsteile den Verstärkungsbereich jeweils durchragen.

Das nach dem vorgenannten Aspekt der Erfindung vorgesehene Strukturbauteil eines Strömungskörpers mit zumindest einer hauptlast-tragenden Beplankungsschale und einer Trägerstruktur zur Befestigung der Beplankungsschale und der Bildung der Beplankungsschale aus Kernschicht-Abschnitten, die jeweils an den einander anliegenden Seiten durch einen Kernschicht-Verstärkungsbereich miteinander verbunden sind, kann insbesondere in Kombination mit der Verwendung einer Rippen-Anordnung vorgesehen sein, bei der entlang eines quer zur Rippenanordnungs-Längsrichtung verlaufenden Beplankungsschalen-Abschnitts Verstärkungsprofile angeordnet sind. Dabei kann die Anordnung und Ausführung der Verstärkungsprofile nach einer der vorgenannten Ausführungsbeispiele gestaltet sein.

Erfindungsgemäß kann weiterhin ein Strömungskörper mit einem Strukturbauteil vorgesehen sein, wobei das Strukturbauteil als haupt-tragendes Strukturteil und nach einem der vorgenannten Ausführungsbeispiele ausgebildet ist.

Nach der Erfindung ist auch ein Strukturbauteil eines Strömungskörpers mit zumindest einer solchen zuvor beschriebenen hauptlast-tragenden Beplankungsschale und einer Trägerstruktur zur Befestigung der Beplankungsschale vorgesehen. Bei einem solchen Strukturbauteil kann vorgesehen sein, dass die Trägerstruktur aus zumindest zwei jeweils entlang einer Längsrichtung des Strukturbauteils verlaufenden Trägerbauteilen und zumindest einer zwischen und quer zu diesen verlaufenden und entlang ihrer Längsrichtung mit der Beplankungsschale verbundenen Rippen-Anordnung zur flächigen Abstützung der Beplankungsschale an der Trägerstruktur gebildet ist und insbesondere die in diesem Zusammenhang hierin genannten Merkmale aufweisen kann.

Nach der Erfindung kann auch ein Strömungskörper mit einem Strukturbauteil vorgesehen sein, das als hauptlast-tragendes Strukturbauteil ausgebildet ist und nach einem oder mehreren der vorgenannten Merkmale gebildet ist.

Nach der Erfindung ist auch ein Strukturbauteil eines Strömungskörpers mit zumindest einer solchen zuvor beschriebenen hauptlast-tragenden Beplankungsschale und einer Trägerstruktur zur Befestigung der Beplankungsschale vorgesehen. Bei einem solchen Strukturbauteil kann vorgesehen sein, dass die Trägerstruktur aus zumindest zwei jeweils entlang einer Längsrichtung des Strukturbauteils verlaufenden Trägerbauteilen und zumindest einer zwischen und quer zu diesen verlaufenden und entlang ihrer Längsrichtung mit der Beplankungsschale verbundenen Rippen-Anordnung zur flächigen Abstützung der Beplankungsschale an der Trägerstruktur gebildet ist und insbesondere die in diesem Zusammenhang hierin genannten Merkmale aufweisen kann.

Alternativ oder zusätzlich kann auch eine hauptlast-tragende Beplankungsschale für ein Strukturbauteil vorgesehen sein, die in ihrer sich flächig erstreckenden Innenbereich als Sandwich-Bauteil und aus einem inneren Hautabschnitt, einem äußeren Hautabschnitt sowie einer zwischen diesen gelegenen schublastaufnehmenden Kernschicht gebildet ist, der den inneren und den äußeren Hautabschnitt flächig miteinander verbindet, wobei die Beplankungsschale zum Anbringen derselben an ein Träger-Bauteil mit einem äußeren Randabschnitt mit einem äußeren Rand ausgebildet ist und der aufweist: einen entlang des Rands verlaufenden kernschichtfreien Anschlussbereich mit dem inneren Hautabschnitt, dem äußeren Hautabschnitt und einer monolithischen Zwischenschicht, wobei in einem Kernschicht-Endbereich entlang des äußeren Randabschnitts der Beplankungsschale Verstärkungs-Vorrichtungen nach der Erfindung integriert sind, die die schublastaufnehmende Kernschicht durchragen.

Unter dem Begriff "Strömungskörper" wird in diesem Zusammenhang ein Körper verstanden, der von einer Strömung umströmt wird, und somit eine StrömungsOberfläche aufweist, die insbesondere einen Abschnitt der umströmten Außenseite eines Fahrzeugs bildet. Der Strömungskörper kann insbesondere ein von Luft umströmter Körper und somit ein aerodynamischer Körper sein. Ein aerodynamischer Körper in diesem Zusammenhang kann generell Teil eines Fahrzeugs und insbesondere Teil eines Flugzeugs sein. Das Fahrzeug kann auch ein bodengebundenes Fahrzeug sein und dabei kann der aerodynamische Körper ein Spoiler sein. Auch kann die Strömung eine Flüssigkeitsströmung und der Strömungskörper ein Schiffkörper oder ein Teil desselben sein.

Nach einem Ausführungsbeispiel der Erfindung ist die erfindungsgemäße Beplankungsschale ein Abschnitt der Beplankung eines Flugzeugteils und z. B. Seitenruders eines Leitwerks und insbesondere eines Höhenleitwerk oder eines Seitenleitwerks und dabei einer Höhenleitwerk-Flosse oder einer Seitenleitwerk-Flosse oder eines Höhenleitwerk-Ruders oder eines Seitenleitwerk-Ruders, eines Flügels, einer Steuerklappe oder einer Hochauftriebsklappe, eines Canards oder eines Rumpfs, also generell eines aerodynamischen Körpers sein. Die vorbestimmte Maximalkraft ist dabei das Aufschlagen eines Körpers mit einem maximalen Gewicht bei einer angenommenen Geschwindigkeit des Flugzeugs und somit Strömungsgeschwindigkeit. Für die erfindungsgemäß vorgesehene Beplankungsschale wird dabei eine Beschädigung zugelassen, die noch die Flugtüchtigkeit des Luftfahrzeuges gewährleistet.

Erfindungsgemäß ist ein Strukturbauteil eines Strömungskörpers mit einer Beplankungsschale sowie eine Beplankungsschale eines Strömungskörpers vorgesehen, wobei die Beplankungsschale derart im Strukturbauteil integriert ist, dass diese eine Strömungsoberfläche ausgebildet und zugleich ein hauptlast-tragender Bestandteil des Strömungskörpers ist.

Erfindungsgemäß ist ein Strukturbauteil oder ist eine Beplankungsschale eines Strukturbauteils des Strömungskörpers als hauptlast-tragendes Strukturteil gebildet. Unter dem Begriff "haupttragend" oder "hauptlast-tragend" wird in diesem Zusammenhang ein Strukturbauteil oder Bestandteil desselben oder eine Beplankungsschale verstanden, das als hinsichtlich seiner Beanspruchung aufgrund äußerer Kräfte im Strömungskörper Hauptlasten aufnimmt und überträgt. Somit sind die hauptlast-tragenden Bestandteile des Strömungskörpers derart auszulegen, dass diese bei dem Auftreten angenommener äußerer Maximalkräfte als tragende Bestandteile erhalten bleiben und in der Lage sein müssen, nach wie vor Mindestlasten zu übertragen. Insofern ist die erfindungsgemäß vorgesehene Beplankungsschale ein "schadenstolerantes" Bauteil oder eine "schadenstolerante" Komponente, da bei dem Auftreten einer vorbestimmten äußeren Maximalkraft die Beschädigung der Beplankungsschale zwar in Kauf genommen wird, jedoch die Beschädigung nicht derart auftreten darf, dass der Strömungskörper noch als Ganzes seine Strömungsfunktion nicht mehr erfüllen könnte.

Die bei den verschiedenen Aspekten der Erfindung und/oder Ausführungsbeispielen und Varianten der Erfindung in der jeweiligen Beplankungsschale vorgesehenen Verstärkungsvorrichtungen können generell nach den hierin genannten Ausführungsbeispielen ausgeführt sein. Dabei hängt die jeweilige Richtung oder Längsrichtung, entlang der die Verstärkungsvorrichtungen in der Beplankungsschale im jeweiligen Anwendungsfall angeordnet sind, von der Orientierung und dem Verlauf des im jeweiligen Anwendungsfall zu verstärkenden Bereichs der Beplankungsschale, in diesem Zusammenhang auch Zwischenbereich oder Verstärkungsbereich genannt, ab.

Als jeweilige Längsrichtung kann insbesondere die Richtung eines Bereichs sein, mit der die Aufnahme von Schubspannungen und somit die Vermeidung von Rissbildungen in der Kernschicht erreicht werden kann. Insbesondere kann als jeweilige Längsrichtung oder der Verlauf, entlang der bzw. dem die Verstärkungsteile und/oder Verstärkungsvorrichtungen erfindungsgemäß angeordnet sind, vorgesehen sein: bei der Verbindung oder Befestigung der Beplankungsschale mit einer Rippenordnung die Rippenanordnungs-Längsrichtung, bei der Bildung von Kernschicht-Abschnitten aus Kernschicht-Verstärkungsbereichen die Längsrichtung oder der Längsverlauf der Verstärkungsbereiche oder eines Abschnitts derselben, bei der Bildung der Beplankungsschale mit einem äußeren Randabschnitt mit einem kernschichtfreien Anschlussbereich entlang des Verlaufs der oder entlang der Längsrichtung derselben oder eines Abschnitts derselben. Die erfindungsgemäß vorgesehene Anordnung von Verstärkungsteilen und/oder Verstärkungsvorrichtungen ist also derart ausgeführt, dass die Verstärkungsvorrichtungen entlang eines länglich ausgebildeten zu verstärkenden Bereichs oder Verstärkungsbereichs des Beplankungsfeldes und in der Längsrichtung desselben hintereinander angeordnet sind, um mit dieser Maßnahme das Weiterleiten von Schubspannungen im Beplankungsfeld zu verhindern. Der Verstärkungsbereich bzw. die Längsrichtung desselben kann geradlinig oder krummlinig verlaufen.

Generell, d.h. bei den verschiedenen Aspekten der Erfindung und/oder Ausführungsbeispielen und Varianten der Erfindung, weist also die Beplankungsschale zur Beeinflussung von Schubspannungen in der Kernschicht eine Mehrzahl von in einem Zwischenbereich der Beplankungsschale, der entlang der flächigen Erstreckung der Beplankungsschale verläuft, angeordnete Verstärkungs-Vorrichtungen auf. Die Ausrichtung der Verstärkungsteile kann insbesondere derart vorgesehen sein, dass der Winkel zwischen der Längsrichtung des jeweiligen Verstärkungsteils und der Dickenrichtung der Beplankungsschale an dieser Stelle innerhalb eines Bereichs zwischen 45 Grad und 10 Grad liegt. Dabei kann generell, vorgesehen ist, dass ein Teil der Verstärkungs-Vorrichtungen oder dass in einem Abschnitt der Beplankungsschale die Verstärkungs-Vorrichtungen gruppenweise angeordnet sind, wobei diese insgesamt eine Gruppe oder mehrere Gruppen bilden können, die in einem vorzugsweise zusammenhängenden Volumenteil der Beplankungsschale entlang der jeweiligen Referenz-Längsrichtung für die Anordnung der Verstärkungs-Vorrichtungen in dem Kernschicht-Endbereich bzw. in der Umgebung oder an den Verstärkungsbereichen angeordnet sind. Die Gruppen von Verstärkungsteilen sind also in der Beplankungsschale entlang einer Längsrichtung derselben eingebracht und können dabei auch zusätzlich quer zu dieser Längsrichtung nebeneinander angeordnet sein. Dabei ist jede Gruppe eines Volumenteils jeweils aus einer Kombination von zumindest zwei Verstärkungsteilen gebildet, die jeweils mit einer Abweichung von maximal 30 Grad dieselbe Orientierung relativ zur Dickenrichtung der Beplankungsschale haben und deren Ausrichtungen relativ zu den weiteren Koordinatenrichtungen der Beplankungsschale zyklisch vorgesehen sind. Für die erfindungsgemäßen Anwendungsfälle ist insbesondere vorgesehen, dass die Längsausrichtungen der Verstärkungsteile in einem Winkelbereich zwischen 45 Grad und 10 Grad in Bezug auf die Dickenrichtung der Beplankungsschale an dieser Stelle gelegen sind. Die weiteren Koordinatenrichtungen sind die beiden in der ebenen Längserstreckung der Beplankungsschale verlaufenden Koordinatenrichtungen, also die Beplankungsschale-Längsrichtung und die Beplankungsschale-Querrichtung. Dabei kann zusätzlich auch zumindest ein weiteres Verstärkungsteil in dem Volumenteil angeordnet sein, das parallel zu einem weiteren Verstärkungsteil in dem Volumenteil ausgerichtet ist. Alternativ oder zusätzlich können generell auch weiter Verstärkungsteile in dem Volumenelement angeordnet sein.

Weiterhin kann generell vorgesehen sein, dass bei den aufeinander folgenden Volumenteilen eine unterschiedliche Anzahl und Form von pinförmigen in den jeweiligen zusammenhängenden Volumenteilen der Beplankungsschale angeordneten Verstärkungsteilen vorgesehen sein können, z. B. in einem ersten Volumenteil zwei Verstärkungsteile, in dem darauf folgenden zweiten Volumenteil vier Verstärkungsteile und in dem darauf folgenden dritten Volumenteil drei Verstärkungsteile. Die Volumenteile sind fiktive Bereiche, deren Grenzen derart definiert sein, das in diesen die jeweilige Anordnung von Verstärkungsteilen angeordnet oder enthalten ist. Die Volumenteile können insbesondere quaderförmig oder würfelförmig definiert sein. Verschiedene Volumenteile einer Abfolge von in der jeweiligen Längsrichtung hintereinander gelegenen Volumenteilen können verschiedene Größen von Volumenteilen haben. Die Volumenteile können sich in der Längsrichtung gesehen auch überlappen, wenn ein Verstärkungsteil eines Volumenteils in das Innere eines jeweils benachbarten anderen Volumenteils eingreift. Die Ausrichtung der Volumenteile ist insbesondere derart vorgesehen, dass eine Mittelachse oder Symmetrieachse der Volumenteile dieselbe Orientierung hat wie die Orientierung der jeweils für die Anordnung der Verstärkungsteile relevanten Längsachse der Beplankungsschale. D.h. bei einer geradlinigen für die Anordnung der Verstärkungsteile relevanten Längsrichtung sind die Volumenteile insbesondere mit derselben Ausrichtung angeordnet, d.h. diese weisen zueinander parallele Mittelachse oder Symmetrieachse auf, wenn die jeweils relevante Längsachse der Beplankungsschale geradlinig verläuft.

Unter "Dickenrichtung der Beplankungsschale" wird erfindungsgemäß die Richtung der kürzesten Abstandslinie zwischen dem inneren Hautabschnitt und dem äußeren Hautabschnitt an der jeweiligen Stelle der Beplankungsschale verstanden.

Unter "in Bezug auf die weiteren Koordinatenrichtungen der Beplankungsschale zyklische Anordnung" der Verstärkungsteile wird in diesem Zusammenhang verstanden, dass die Ausrichtungen der Verstärkungsteile in Bezug auf die weiteren Koordinatenrichtungen der Beplankungsschale zyklisch vorgesehen sind. Räumlich gesehen bedeutet dies auch, dass die Verstärkungsteile mit der vorgegebenen Orientierung gleichmäßig oder ungleichmäßig entlang eines Zylindermantels verteilt sind, der um die durch z. B. das geometrische Zentrum des Volumenteils verlaufende Dickenkoordinate der Beplankungsschale verläuft. Bei nur zwei Verstärkungsteilen ergibt sich die genannten X-förmige Anordnung derselben.

Unter "Längserstreckung der Beplankungsschale" wird erfindungsgemäß die lokale Orientierung der Mittelebene der Beplankungsschale verstanden, die lokal oder über den gesamten jeweils betrachteten Abschnitt derselben gekrümmt oder ungekrümmt gestaltet sein kann.

Unter "Orientierung der Verstärkungsteile" wird die Richtung der Längsachse der Verstärkungsteile verstanden. Die Längsachse der Verstärkungsteile kann die Symmetrieachse sein und bei einer unsymmetrischen und z. B. gekrümmten Gestaltung der Verstärkungsteile kann die Orientierung der Verstärkungsteile durch die Sehne des in der Längsrichtung vordersten und hintersten Punktes verstanden. Die Längsrichtung ergibt sich aus der größten Länge der Verstärkungsteile.

Unter "für die Anordnung der Verstärkungsvorrichtungen relevanten Längsachse der Beplankungsschale" wird erfindungsgemäß die Längsrichtung des jeweiligen Zwischenbereichs verstanden.

Nach einem Ausführungsbeispiel für die Gestaltung und Anordnung von Verstärkungs-Vorrichtungen kann vorgesehen sein, dass in zumindest einem Volumenteil oder in sämtlichen Volumenteilen entlang einer jeweils für die Anordnung der Verstärkungsteile relevanten Längsachse der Beplankungsschale jeweils ein Paar von Verstärkungsteilen oder genau zwei Verstärkungsteile angeordnet sind, die derart zueinander orientiert sind, dass diese jeweils in der jeweils für die Anordnung der Verstärkungsteile relevanten Längsachse der Beplankungsschale gesehen X-förmig angeordnet sind.

Unter "Längserstreckung der Beplankungsschale" wird erfindungsgemäß eine Richtung oder eine flächige Erstreckung verstanden, die in der Ebene gelegen ist, die durch die Querrichtung der Beplankungsschale und der Längsrichtung der Beplankungsschale an der jeweiligen Stelle aufgespannt wird.

Die Verstärkungsteile können insbesondere pinförmig oder stabförmig gestaltet sein.

Auch können Verstärkungsteile plattenförmig gebildet sein. Dabei kann insbesondere vorgesehen sein, dass zumindest jeweils zwei in der Längsrichtung des Zwischenbereichs gesehen X-förmig angeordnete plattenförmige Verstärkungsteile ineinander greifend angeordnet sind. Weiterhin kann dabei insbesondere vorgesehen sein, dass sich die plattenförmigen Verstärkungsteile in ihrer Breitenrichtung insbesondere in der Längsrichtung des Zwischenbereichs oder in der jeweils für die Anordnung der Verstärkungsvorrichtungen relevanten Längsachse der Beplankungsschale erstrecken.

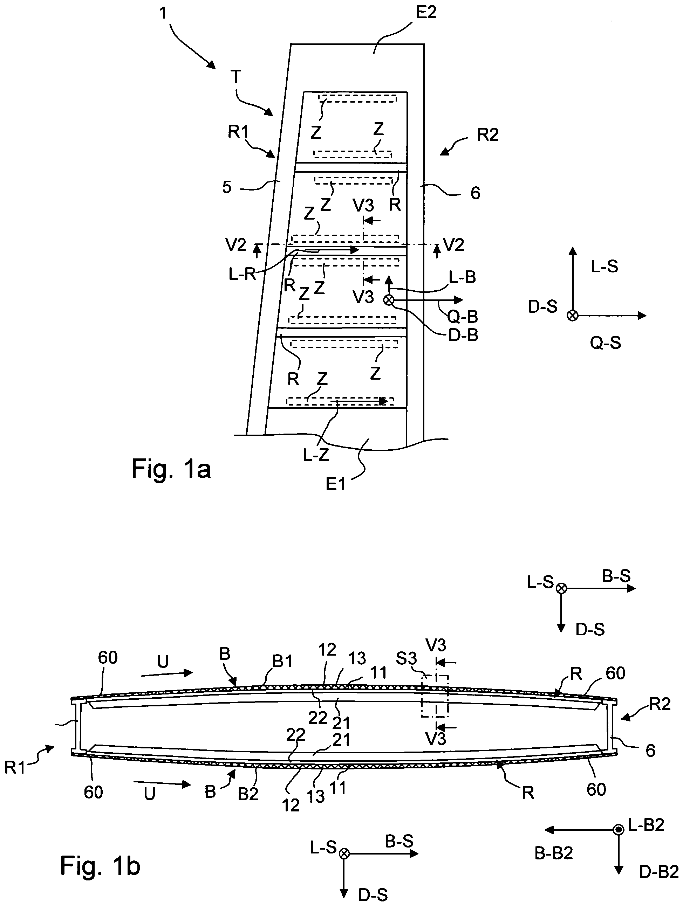

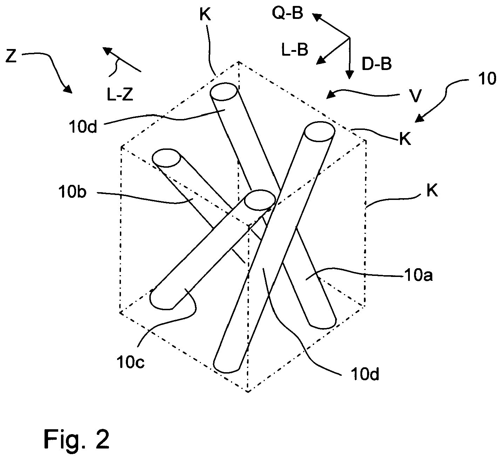

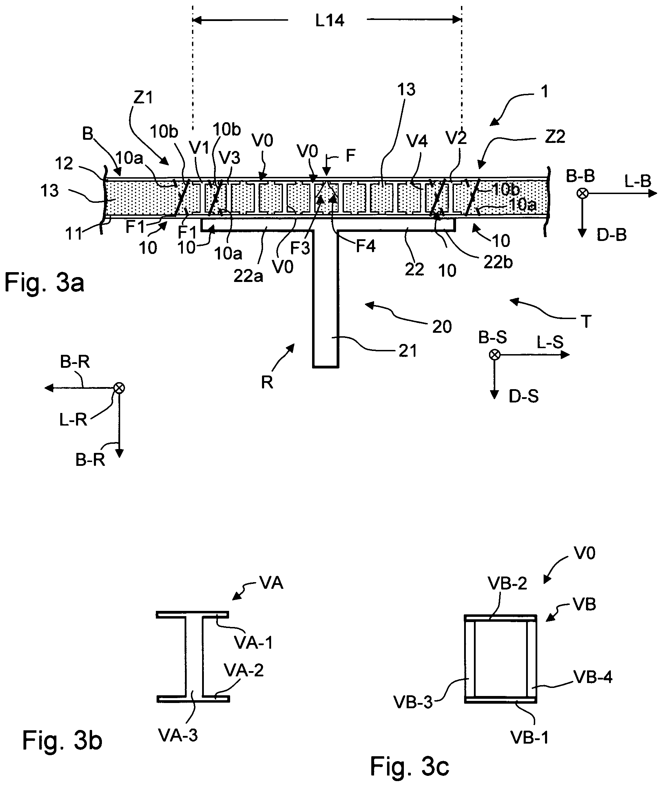

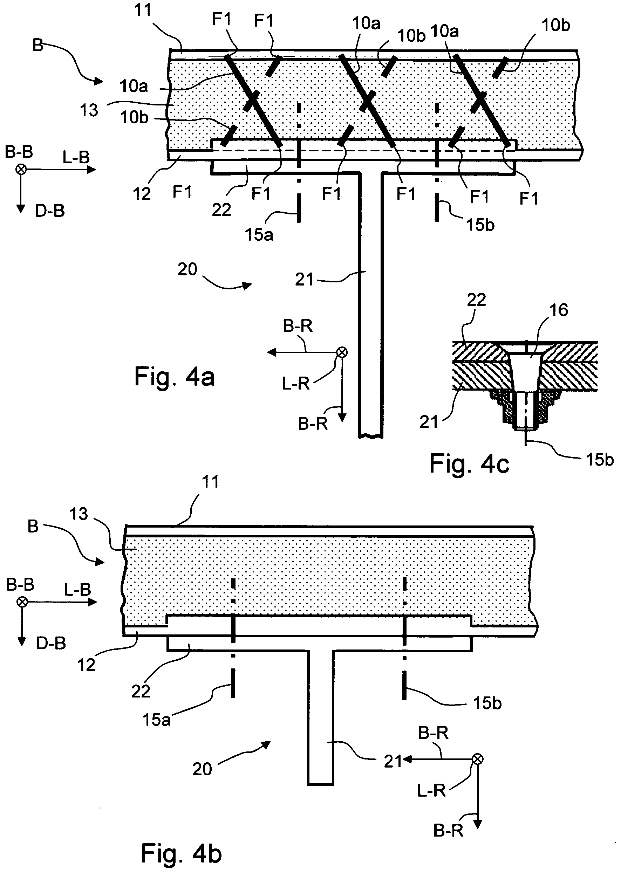

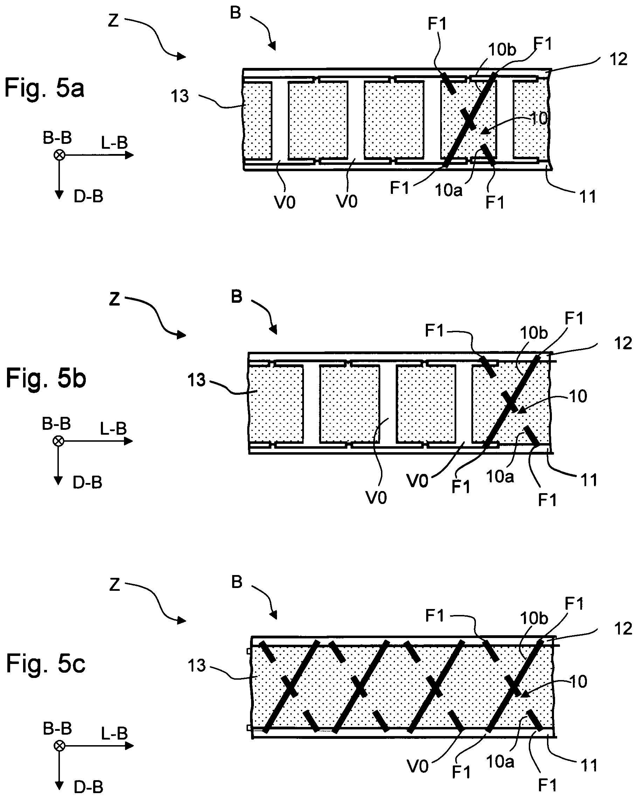

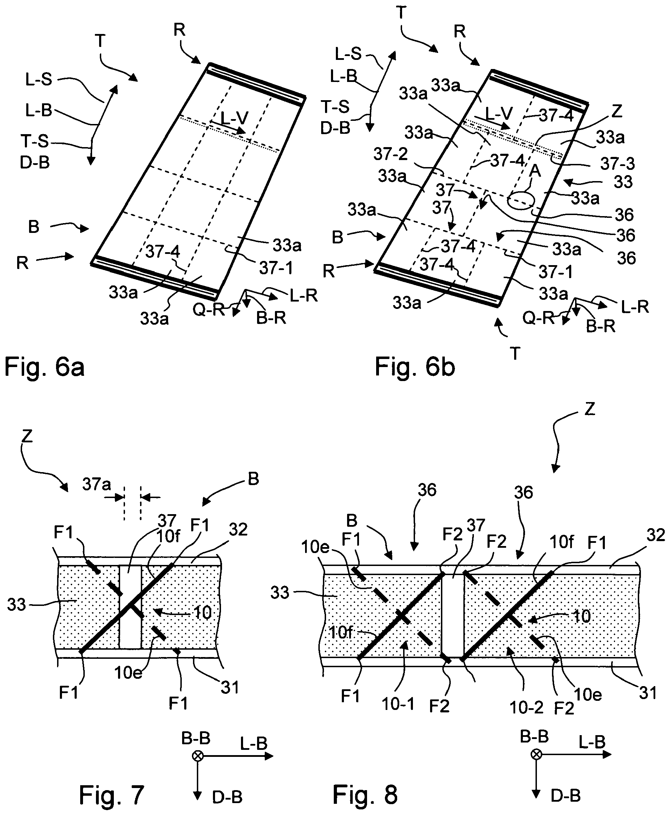

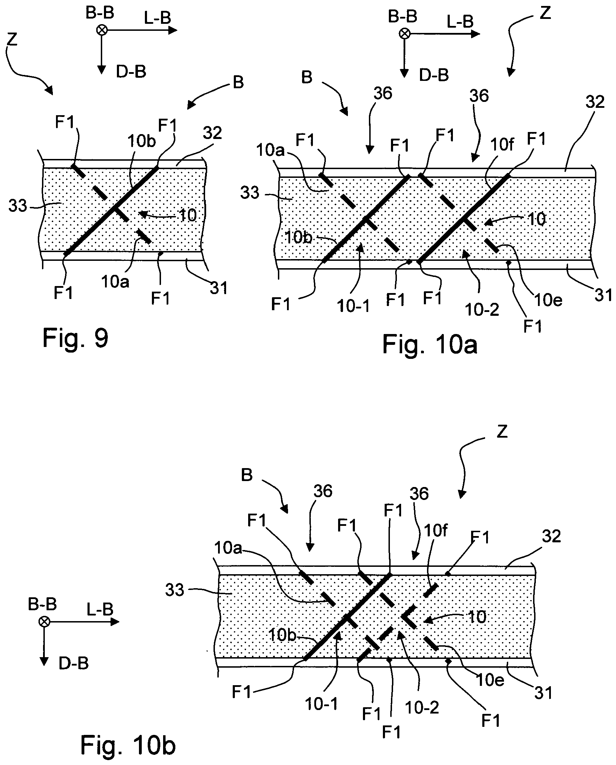

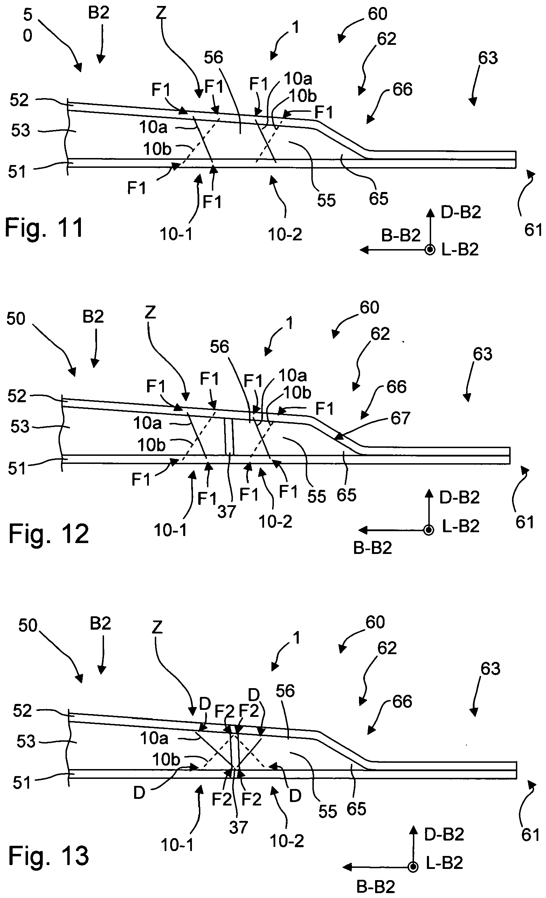

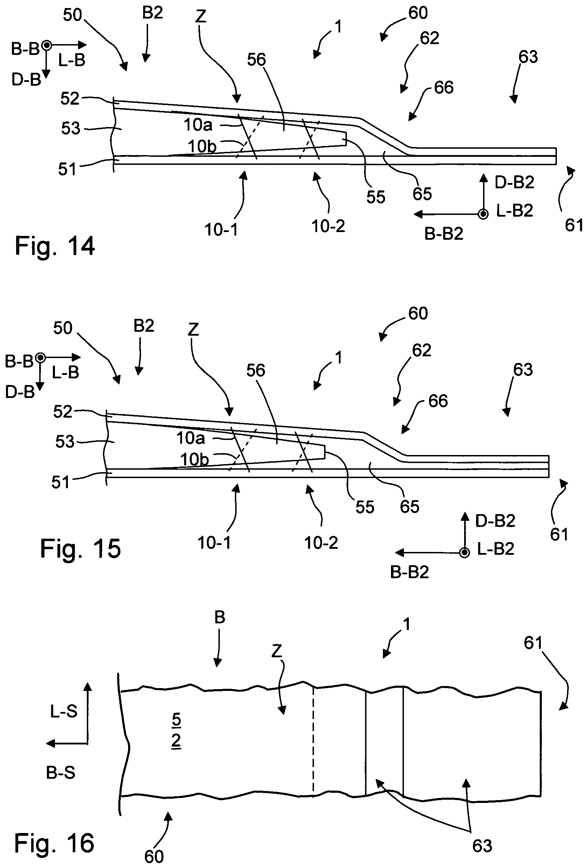

Im Folgenden werden Ausführungsbeispiele der Erfindung an Hand der beigefügten Figuren beschrieben, die zeigen:
■ Figur 1 a eine schematische Draufsicht auf ein Strukturbauteil oder einen Abschnitt eines Seitenleitwerks als Beispiel des erfindungsgemäßen Strömungskörpers mit Trägerbauteilen und zwischen diesen verlaufenden Rippen, bei dem jedoch die bestimmungsgemäß vorgesehene Beplankungsschale nicht dargestellt ist, wobei schematisch die Lage von Zwischenbereichen oder Verstärkungsbereichen für die Anordnung von erfindungsgemäß vorgesehenen Verstärkungs-Vorrichtungen eingetragen sind,
■ Figur 1b eine Schnittdarstellung des Strömungskörpers nach der Figur 1 a entlang der in der Figur 1 a eingetragenen Linie V2-V2 mit der ebenfalls in der Figur 1 a eingetragenen Blickrichtung in Form zweier Pfeile,
■ Figur 2 eine schematische Schnittdarstellung eines fiktiven Volumenteils als Teil des Zwischenbereichs der Beplankungsschale mit einer Ausführungsform einer Verstärkungs-Vorrichtung mit Verstärkungsteilen, die zyklisch in dem Volumenteil angeordnet sind,
■ Figur 3a eine Schnittdarstellung eines Bereichs S3 des Strömungskörpers der Figuren 1 a und 1 b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer Beplankungsschale ist, die nach einem Ausführungsbeispiel der Erfindung mit einem inneren, einem äußeren Hautabschnitt sowie einer zwischen diesen gelegenen schublast-aufnehmenden Kernschicht gestaltet ist,
■ Figur3b 3b eine Darstellung einer ersten Ausführungsform einer Querschnittsform von in dem Strukturbauteil nach der Figur 3 verwendeten Verstärkungsprofilen,
■ Figur 3c eine Darstellung einer zweiten Ausführungsform einer Querschnittsform von in dem Strukturbauteil nach der Figur 3 verwendeten Verstärkungsprofilen,
■ Figur 3b eine Schnittdarstellung des Bereichs S3 des Strömungskörpers der Figuren 1 a und 1 b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer mit einem inneren, einem äußeren Hautabschnitt sowie einer zwischen diesen gelegenen schublast-aufnehmenden Kernschicht gestalteten Beplankungsschale, bei der die Befestigung der Tragstruktur an der Beplankungsschale nach einem weiteren Ausführungsbeispiel der Erfindung ausgeführt ist,
■ Figur 4b eine Schnittdarstellung des Bereichs S3 des Strömungskörpers der Figuren 1 a und 1 b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer mit einem inneren, einem äußeren Hautabschnitt sowie einer zwischen diesen gelegenen schublast-aufnehmenden Kernschicht gestalteten Beplankungsschale, bei der die Befestigung der Tragstruktur an der Beplankungsschale nach einem weiteren Ausführungsbeispiel der Erfindung ausgeführt ist,
■ Figur 4c eine Darstellung einer erfindungsgemäßen Ausführungsform eines Verbindungselements einer Verbindungsvorrichtung zur Verbindung eines Anschlussteils einer Trägerstruktur an der Beplankungsschale mit einem Verbindungselement,
■ Figur 5a eine Querschnittsdarstellung eines Ausführungsbeispiels eines oberhalb der Rippenanordnung gelegenen Anschlussbereichs des Beplankungsschalen-Abschnitts der Beplankungsschale mit einem Verstärkungsprofilteilen, wobei in der Beplankungsschale zwischen zwei Verstärkungsprofilteilen eine Anordnung von X-förmig zueinander angeordneten Verstärkungs-Vorrichtungen nach der Erfindung integriert sind,
■ Figur 5b eine Querschnittsdarstellung eines weiteren Ausführungsbeispiels eines oberhalb der Rippenanordnung gelegenen Anschlussbereichs des Beplankungsschalen-Abschnitts der Beplankungsschale mit einer Mehrzahl von Verstärkungsprofilteilen, wobei in der Beplankungsschale seitlich der Verstärkungsprofilteile eine Anordnung von X-förmig zueinander angeordneten Verstärkungs-Vorrichtungen nach der Erfindung integriert sind,
■ Figur 5c eine Querschnittsdarstellung eines weiteren Ausführungsbeispiels eines oberhalb der Rippenanordnung gelegenen Anschlussbereichs des Beplankungsschalen-Abschnitts der Beplankungsschale, in den eine Mehrzahl von X-förmig zueinander angeordneten Verstärkungs-Vorrichtungen nach der Erfindung integriert sind,
■ Figur 6a eine perspektivische Draufsicht auf eine erste Ausführungsform einer Beplankungsschale nach der Erfindung mit schematisch dargestellten Trägerstrukturen, wobei bei der Darstellung der Beplankungsschale schematisch Verstärkungsbereiche oder Verbindungsbereiche innerhalb der schublastaufnehmenden Kernschicht der Beplankungsschale eingetragen sind,
■ Figur 6b eine perspektivische Draufsicht auf eine zweite Ausführungsform einer Beplankungsschale nach der Erfindung mit schematisch nach der Figur 6a dargestellten Trägerstrukturen, bei der die Verstärkungsbereiche oder Verbindungsbereiche innerhalb der schublast-aufnehmenden Kernschicht der Beplankungsschale gegenüber der in der Figur 6a verändert sind,
■ Figur 7 einen Querschnitt eines ersten Ausführungsbeispiels eines in der Figur 6 mit "A" bezeichneten Bereichs der Beplankungsschale nach der Figur 7, der mit einem Verbindungsbereich aus Harz sowie eine Ausführungsform einer im Zusammenhang mit dem Verbindungsbereich vorgesehenen Anordnung von Rippenanordnungs-Verstärkungsprofilen aufweist,
■ Figur 8 einen Querschnitt eines zweiten Ausführungsbeispiels eines in der Figuren 6a und 6b mit "A" bezeichneten Bereichs der Beplankungsschale nach den Figuren 6a oder 6b, der mit einem Verbindungsbereich aus Harz sowie einer weiteren Ausführungsform einer im Zusammenhang mit dem Verbindungsbereich vorgesehenen Anordnung von Rippenanordnungs-Verstärkungsprofilen aufweist,
■ Figur 9 einen Ausschnitt eines Querschnitts der Beplankungsschale, in die eine Reihe von Verstärkungsvorrichtungen mit jeweils einer Anordnung von zwei Verstärkungsteilen, die zueinander X-förmig gelegen sind, eingebracht sind, wobei in der Figur 9 die Verstärkungsteile einer Verstärkungsvorrichtung dargestellt sind,
■ Figur 10a einen Ausschnitt eines Querschnitts der Beplankungsschale, in die zwei nebeneinander verlaufende Reihen von Verstärkungsvorrichtungen mit jeweils einer Anordnung von zwei Verstärkungsteilen, die zueinander X-förmig gelegen sind, eingebracht sind, wobei in der Figur 10a die zwei Verstärkungsteile jeweils einer Verstärkungsvorrichtung dargestellt sind,
■ Figur 10b einen Ausschnitt eines Querschnitts der Beplankungsschale, in die zwei nebeneinander verlaufende Reihen von Verstärkungsvorrichtungen mit jeweils einer Anordnung von zwei Verstärkungsteilen, die zueinander X-förmig gelegen sind, eingebracht sind, wobei in der Figur 10a die zwei Verstärkungsteile jeweils einer Verstärkungsvorrichtung dargestellt sind, wobei die Verstärkungsvororichtungen derart angeordnet sind, dass sich die Verstärkungsteile der verschiedenen Verstärkungsvorrichtungen in der Längsrichtung ihres Verlaufs gesehen einander kämmen und reissverschlussartig zueinander angeordnet sind,
■ Figur 11 einen Querschnitt einer Ausführungsform des erfindungsgemäßen äußeren Randabschnitts der Beplankungsschale mit einem kernschichtfreien Anschlussbereich mit einem inneren Hautabschnitt und einem darauf gelegenen äußeren Hautabschnitt, wobei in einem Kernschicht-Endbereich Verstärkungs-Vorrichtungen nach der Erfindung eingesetzt sind,
■ Figur 12 einen Querschnitt einer weiteren Ausführungsform des erfindungsgemäßen äußeren Randabschnitts der Beplankungsschale mit einem kernschichtfreien Anschlussbereich sowie mit in einem Kernschicht-Endbereich eingesetzten Verstärkungs-Vorrichtungen nach der Erfindung, wobei der Kernschicht-Endbereich einen Verstärkungsbereich aufweist, neben dem die Verstärkungs-Vorrichtungen eingesetzt sind,
■ Figur 13 einen Querschnitt einer weiteren Ausführungsform des erfindungsgemäßen äußeren Randabschnitts der Beplankungsschale mit einem kernschichtfreien Anschlussbereich sowie mit in einem Kernschicht-Endbereich eingesetzten Verstärkungs-Vorrichtungen nach der Erfindung, wobei der Kernschicht-Endbereich einem Verstärkungsbereich aufweist und die Verstärkungs-Vorrichtungen den Verstärkungsbereich an ihren Enden teilweise durchragen,
■ Figur 14 einen Querschnitt einer weiteren Ausführungsform des erfindungsgemäßen äußeren Randabschnitts der Beplankungsschale mit einem kernschichtfreien Anschlussbereich sowie mit in einem Kernschicht-Endbereich, wobei in dem Kernschicht-Endbereich und dem Anschlussbereich eine monolithische Zwischenschicht eingesetzt ist,
■ Figur 15 einen Querschnitt der Ausführungsform des erfindungsgemäßen äußeren Randabschnitts der Beplankungsschale nach der Figur 9, wobei zusätzlich in den Kernschicht-Endbereich Verstärkungs-Vorrichtungen nach der Erfindung eingesetzt sind, und
■ Figur 16 eine Draufsicht auf einen Abschnitt des Beplankungsschalen-Bereichs nach den Figuren 11 bis 15.

Die erfindungsgemäß vorgesehene Beplankungsschale B oder Beplankungsplatte ist als haupt-tragendes oder hauptlast-tragendes Verkleidungsteil oder Beplankungsteil eines Strömungskörpers und insbesondere eines aerodynamischen Körpers vorgesehen. Die Figur 1 zeigt eine schematische Draufsicht auf ein Strukturbauteil 1 oder einen Abschnitt eines Seitenleitwerks als Beispiel des erfindungsgemäßen Strömungskörpers oder aerodynamischen Körpers. Das Strukturbauteil 1 ist aus einer Trägerstruktur T und einer diese umgebenden und mit dieser verbundenen Beplankungsschale B gebildet. Erfindungsgemäß ist die Beplankungsschale B als Sandwich und aus einem inneren Hautabschnitt 11, einem äußeren Hautabschnitt 12 sowie einer zwischen diesen gelegenen schublast-aufnehmenden Kernschicht 13 oder einem zwischen diesen gelegenen schublast-aufnehmenden Schaumkern gebildet. Der innere Hautabschnitt 11 und der äußere Hautabschnitt 12 kann jeweils aus Fiberglas oder aus einem kohlenstoff-basierten Material gebildet sein und insbesondere ein Faserverbundkunststoff sein. Der innere Hautabschnitt 11 und der äußere Hautabschnitt 12 erstreckt sich jeweils über die Beplankungsschale B. Unter der Bezeichnung "innerer Hautabschnitt 11" wird in Bezug auf deren Lage und Orientierung ein Hautabschnitt verstanden, der auf der Innenseite der Beplankungsschale B gelegen und somit einem von der Beplankungsschale B abzudeckenden Inneren oder Innenraum eines Strukturbauteils 1 oder eines Strömungskörpers zugewandt ist. Bei der Verwendung des Strukturbauteils 1 für einen Strömungskörper ist die "äußere Hautabschnitt 12" der bestimmungsgemäß am Strömungskörper anliegenden Strömung zugewandt.

Die Figur 1b zeigt einen Schnitt entlang der in der Figur 1 a eingetragenen Linie V2-V2 und zeigt einen Teil eines Strömungskörpers 1, der aus zwei zueinander beabstandeten Beplankungsschalen B gebildet, von denen eine erste Beplankungsschale B1 und eine zweite Beplankungsschale B2 entlang zueinander und beabstandet voneinander verlaufen. Deren Außenflächen bilden die Strömungsflächen des Strömungskörpers 1. Der Strömungskörper 1 kann z. B. Teil eines Seitenleitwerks oder Seitenruders oder Teil eines Flügels oder einer Stellklappe sein. Bei der Ausführung des Strömungskörpers 1 als Seitenleitwerk oder Seitenruder sind die Außenseiten der Beplankungsschalen B1, B2 vorzugsweise achsensymmetrisch zueinander gebildet. Bei der Ausführung des Strömungskörpers 1 als Flügel oder einer Stellklappe können die Außenseiten der Beplankungsschalen B1, B2 achsensymmetrisch oder nicht symmetrisch zueinander gebildet sein. Insbesondere kann bei einer derartigen Verwendung des Strömungskörpers 1 an einem Flugzeug bei einer angenommenen Strömungsrichtung U für eine bei einer solchen Verwendung bestimmungsgemäßen Hauptumströmung beispielsweise die Außenseite der ersten Beplankungsschale B1 die Saugseite und die Außenseite der zweiten Beplankungsschale B2 die Druckseite des Strömungskörpers bilden.

In der Figur 1b ist nur ein Teil des Strömungskörpers 1 dargestellt, der in der Breitenrichtung oder Tiefenrichtung B-S gesehen von Randseiten oder Rand-Endstücken R1, R2 begrenzt ist, die von sich in der Längsrichtung L-S erstreckenden Trägerbauteilen 5 bzw. 6 der Trägerstruktur T gebildet werden. An den Trägerbauteilen 5, 6 sind Rippen oder Rippen-Anordnungen R derart befestigt, dass diese sich beabstandet voneinander zwischen den Trägerbauteilen 5 und 6 erstrecken. Die Rippen oder Rippen-Anordnungen R dienen als Versteifungsbauteile für die Beplankungsschalenteile B1 bzw. B2. Die Beplankungsschalenteile B1 bzw. B2 können an ihren in der Breiten-Richtung B-S des Strukturbauteils 1 gelegenen Enden als Randbereiche 60 ausgebildet sein, die z. B. abschnittsweise keine Kernschicht 13 aus Schaum aufweisen, wie diese an Hand der Figuren 11 und 12 beschrieben werden. An den Beplankungsschalenteilen B1 bzw. B2 können sich in der Breiten-Richtung B-S des Strukturbauteils 1 gesehen hintereinander eine oder mehrere Beplankungsschalenteile B1 bzw. B2 anschließen, wobei insbesondere zwei Beplankungsschalenteile B1 bzw. B2 an jeweils einer 5, 6 angebracht sein können.

Alternativ kann sich ein Beplankungsschalenteil B1, B2 auf jeder oder einer der Seiten in Bezug auf die Dickenrichtung D-S von mehr als zwei Trägerbauteilen 5, 6 gehalten werden. Dabei weist also der Strömungskörper 1 von mehr als zwei jeweils voneinander in der Breitenrichtung B-S voneinander beabstandet verlaufenden Trägerbauteilen 5, 6 auf, und erstreckt sich jedes der Beplankungsschalenteile B1 bzw. B2 zwischen den zwei in Bezug auf die Bereitenrichtung äußeren Trägerbauteile 5, 6 und über zumindest ein weiteres Trägerbauteil hinweg.

Der innere Hautabschnitt 11 und der äußere Hautabschnitt 12 kann jeweils aus Fiberglas oder aus einem kohlenstoff-basierten Material gebildet sein und insbesondere ein Faserverbundkunststoff sein. Der innere Hautabschnitt 11 und der äußere Hautabschnitt 12 erstreckt sich jeweils über die Beplankungsschale B. Die schublast-aufnehmende Kernschicht 13 kann generell bei der Erfindung bzw. den verschiedenen Aspekten der Erfindung als Massivkern oder als Schaumkern gestaltet sein. In der Ausführungsform der Kernschicht als Massivkern kann die Kernschicht aus einem Kunststoff und insbesondere aus Polyethylen und/oder Polybuthylen gebildet sein. Alternativ oder zusätzlich kann die Kernschicht aus Plexiglas gebildet sein. In der Ausführungsform der Kernschicht als Schaumkern kann die Kernschicht aus einem PVC-Schaum oder einem geschäumten Plexiglas gebildet sein. Erfindungsgemäß sind in der Beplankungsschale B zur Beeinflussung von Schubspannungen in der Kernschicht mehrere Verstärkungsteile und/oder Verstärkungs-Vorrichtungen 10 integriert, die jeweils zumindest 85 % der schublast-aufnehmenden Kernschicht 13 in deren Dickenrichtung durchragen, um die Rissfestigkeit der Beplankungsschale B zu verbessern (nicht in der Figur 1a gezeigt).

Die Trägerstruktur T kann insbesondere gebildet sein aus (Figuren 1a und 3): zumindest zwei jeweils entlang einer Längsrichtung L-S des Strukturbauteils 1 und in einem Abstand in Tiefenrichtung oder Querrichtung B-S des Strukturbauteils 1 nebeneinander verlaufenden Trägerbauteilen oder Trägerprofilen 5, 6 und/ oder zumindest einer zwischen und quer zu diesen verlaufenden und entlang ihrer Längsrichtung L-R mit der Beplankungsschale B verbundenen Rippen-Anordnung R zur flächigen Abstützung der Beplankungsschale B an der Trägerstruktur T. Die Breite der Versteifungsrippen der Rippen-Anordnung R erstreckt sich in der Tiefenrichtung T-S des Strukturbauteils 1. In Längsrichtung L-S des Strukturbauteils 1 können die Trägerbauteile 5, 6 mittels jeweils einem Endabschnitt E1 bzw. E2 verbunden sein. Die Trägerbauteile 5, 6 können insbesondere Längsversteifungs-Bauteilkomponenten oder Längsspante oder Holme sein. Wenn beispielsweise der Strömungskörper ein Flugzeugteil ist, können die Trägerbauteile 5, 6 Längsspante oder Holme eines Rumpfs, eines Tragflügels, eines Seitenleitwerks, einer Stellklappe oder einer Höhenflosse sein. Jede der Rippen-Anordnungen R oder zumindest eine von mehreren Rippen-Anordnungen R der Trägerstruktur T weist auf: ein Flanschteil 22, das entlang der Rippen-Längsrichtung L-R flächig mit der Beplankungsschale verbunden ist, und eine daran anschließende und von dem Flanschteil 22 bzw. der Beplankungsschale B in seiner Querrichtung Q-R abstehende Rippe 21. Die Rippe 21 und das Flanschteil 22 können einstückig hergestellt sein. Insbesondere kann vorgesehen sein, dass die Rippe 21 und das Flanschteil 22 jeweils getrennt oder zusammen als ein Bauteil als Faserverbundkunststoff hergestellt ist. In die Figuren 1 a und 1 b ist auch ein auf die Beplankungsschale bezogenes Koordinatensystem mit der Beplankungsschalen-Längsrichtung L-B, der Beplankungsschalen-Querrichtung B-B und der Beplankungsschalen-Dickenrichtung D-B, als Achsen eingetragen.

Die Figur 1a zeigt auch Zwischenbereiche oder mit den erfindungsgemäß vorgesehenen Verstärkungs-Vorrichtungen 10 zu verstärkende Bereiche des Schaumkerns.

Die erfindungsgemäße hauptlast-tragende Beplankungsschale B kann insbesondere zur Herstellung eines solchen Strukturbauteils 1 angewendet werden. Da die Beplankungsschale B auf der Trägerstruktur T zur Ausbildung einer Außenseite des Strömungskörpers befestigt ist und insofern wesentlich für die Herstellung einer Umströmung des Strömungskörpers ist und dabei die äußeren Luftkräfte aufnimmt sowie in vorbestimmten Umfang die Wirkungen von auf die Beplankungsschale B auftreffenden Gegenständen kompensieren soll, ist die Beplankungsschale B eine hauptlast-tragende Strukturkomponente des Strukturbauteils 1. Bei der Kompensation von Wirkungen von auf die Beplankungsschale B auftreffenden Gegenständen wird mit der erfindungsgemäßen Beplankungsschale B erreicht, dass die Beplankungsschale B nach dem Auftreffen der Gegenstände als insgesamt stabiles Gebilde erhalten bleibt, das danach weiterhin die Strömungskräfte aufnimmt.

Erfindungsgemäß ist eine hauptlast-tragende Beplankungsschale B für ein solches Strukturbauteil 1 vorgesehen. Die Beplankungsschale B zum Anbringen derselben an ein Träger-Bauteil mit einem äußeren Randabschnitt 60 mit einem äußeren Rand 61 und mit einem entlang des Rands 61 verlaufenden Anschlussbereich 63 ausgebildet, der insbesondere zur Anbringung der Beplankungsschale B an einem Trägerbauteil 5, 6 oder einer Befestigungsstruktur vorgesehen ist (Figuren 11 bis 16). Zu diesem Zweck kann der Anschlussbereich 63 Ausnehmungen oder Durchbrüche oder Bohrungen zur Aufnahme von Verbindungselementen aufweisen. Alternativ oder zusätzlich kann der Anschlussbereich 63 an einem angeklebt oder an diesem angeschweißt sein.

Die Figur 1 a zeigt auch Zwischenbereiche oder mit den erfindungsgemäß vorgesehenen Verstärkungs-Vorrichtungen zu verstärkende Bereiche der Beplankungsschale B und insbesondere der Kernschicht 53 oder des Schaumkerns derselben in vorbestimmten Bereichen.

Da die Beplankungsschale B auf der Trägerstruktur T oder einer Befestigungsstruktur zur Ausbildung einer Außenseite des Strömungskörpers befestigt ist und insofern wesentlich für die Herstellung einer Umströmung des Strömungskörpers ist, ist die Beplankungsschale B eine hauptlast-tragende Strukturkomponente des Strukturbauteils 1.

In Ausführungsbeispielen der Erfindung weist die Beplankungsschale B zur Beeinflussung von Schubspannungen und zur Vermeidung von Rissbildungen in der Kernschicht 13 eine Mehrzahl von in einem Zwischenbereich Z angeordneten Verstärkungsteilen und/oder Verstärkungs-Vorrichtungen 10 auf, die jeweils aus einer Kombination von zumindest zwei in einem zusammenhängenden Volumenteil V (Figur 2) der Beplankungsschale B angeordneten Verstärkungsteilen gebildet sind. In der Figur 2 ist ein Ausführungsbeispiel eines solchen fiktiven Volumenteils V in Form eines Quaders mit den Kantenlinien K dargestellt. Zur Orientierung ist in der Figur 2 auch die Längsrichtung L-Z des Zwischenbereichs Z sowie das Koordinatensystem der Beplankungsschale mit deren Koordinatenachsen L-B, Q-B und D-B dargestellt. Die Anordnung der Verstärkungs-Vorrichtungen 10 ist insbesondere in der Längsrichtung L-Z des Zwischenbereichs Z hintereinander vorgesehen. In dem Ausführungsbeispiel nach der Figur 2 ist die dort dargestellte Verstärkungs-Vorrichtung 10 aus einer Kombination von vier Verstärkungsteilen 10a, 10b, 10c, 10d gebildet, wobei bei der Kombination der Verstärkungsteile 10a, 10b, 10c, 10d diese jeweils mit einer Abweichung von maximal 10 Grad dieselbe Orientierung in Bezug auf die Dickenrichtung D-B der Beplankungsschale B haben und wobei die Ausrichtungen der Verstärkungsteile in Bezug auf die weiteren Koordinatenrichtungen L-B, Q-B der Beplankungsschale B zyklisch ist.

Ein Aspekt der Erfindung bezieht sich auf den sich flächig zwischen Rippen-Anordnungen R erstreckenden Bereich der Beplankungsschale B und wird nachfolgend an Hand eines in der Figur 11 dargestellten Ausführungsbeispiels beschrieben. Danach ist ein Strukturbauteil 1 eines Strömungskörpers mit zumindest einer Beplankungsschale B und einer Trägerstruktur T zur Befestigung der Beplankungsschale B vorgesehen, wobei die Beplankungsschale B als Sandwich und aus einem inneren Hautabschnitt 31, einem äußeren Hautabschnitt 32 sowie einem zwischen diesen gelegenen schublast-aufnehmende Kernschicht 33 oder einer Schaumschicht gebildet ist, der den inneren und den äußeren Hautabschnitt 31, 32 flächig miteinander verbindet (Figuren 7, 8). Dabei ist die sich zwischen den Trägerbauteilen T und der Rippen-Anordnung R erstreckende und zwischen dem inneren und dem äußeren Hautabschnitt 31, 32 gelegene schublast-aufnehmende Kernschicht 33 aus mehreren in der Längserstreckung der schublast-aufnehmenden Kernschicht 33 oder der Schaumschicht nebeneinander angeordneten schublastaufnehmenden Kernschicht-Abschnitten 33a gebildet. Die schublast-aufnehmenden Kernschicht-Abschnitte 33a sind dabei miteinander jeweils an den einander anliegenden Seiten durch einen Kernschicht-Verstärkungsbereich 37 verbunden, der sich in seiner Längsrichtung L-V (Figur 6) quer zur Längserstreckung der schublastaufnehmende Kernschicht 33 durch diesen hindurch erstreckt.

Der Kernschicht-Verstärkungsbereich 37 kann dabei zwischen dem inneren Hautabschnitt 31 und dem äußeren Hautabschnitt 32 verlaufen. Dabei kann insbesondere vorgesehen sein, dass der Kernschicht-Verstärkungsbereich 37 mit dem inneren Hautabschnitt 31 und dem äußeren Hautabschnitt 32 verbunden ist, so dass der Kernschicht-Verstärkungsbereich 37 an dem inneren Hautabschnitt 31 und dem äußeren Hautabschnitt 32 befestigt sind. Der Kernschicht-Verstärkungsbereich 37 kann insbesondere aus einem Material gebildet sein, das eine mindestens zweifache Steifigkeit aufweist als der Kernschicht-Verstärkungsbereich 37. Nach einer Ausführungsform der Beplankungsschale B beträgt die Dicke 17a des Kernschicht-Verstärkungsbereichs 37 zwischen dem 0,1- und dem 2,0-fachen der Breite der Beplankungsschale B an dieser Stelle, wobei die Dicke senkrecht zur Längserstreckung der Beplankungsschale gemessen ist.

Der Kernschicht-Verstärkungsbereich 37 kann insbesondere aus Harz gebildet sein. In der Figur 3 ist ein Ausführungsbeispiel des erfindungsgemäßen Strukturbauteils dargestellt, wobei mit gestrichelten Linien die Randlinien der einzelnen schublastaufnehmenden Kernschicht-Abschnitten 33a bzw. der Verlauf der Kernschicht-Verstärkungsbereiche 37 angezeigt sind.

In diesem Zusammenhang kann die Trägerstruktur T insbesondere aus zumindest zwei jeweils entlang einer Längsrichtung L-S des Strukturbauteils 1 verlaufenden Trägerbauteilen 5, 6 (nicht in der Figur 3 gezeigt) und zumindest einer mit der Beplankungsschale B verbundenen Rippen-Anordnung R zur flächigen Abstützung der Beplankungsschale B an der Trägerstruktur T gebildet sein (Figur 1).

Die Trägerbauteile 5, 6 können insbesondere nach Ausführungsbeispielen gebildet sein, die an Hand der Figuren 1 und 2 beschrieben worden sind.

In der Ausführungsform des Strukturbauteils nach der Figur 3 sind die Verläufe der Kernschicht-Verstärkungsbereiche 37 derart vorgesehen, dass sich rechteckige schublast-aufnehmende Kernschicht-Abschnitte 33a ergeben oder dass sich umgekehrt die Kernschicht aus Kernschicht-Abschnitten 33a zusammensetzt, die über Kernschicht-Verstärkungsbereiche 37 miteinander verbunden sind. Dabei sind mehrere Kernschicht-Verstärkungsbereiche 37-1, 37-2, 37-3 vorgesehen, die insbesondere entlang der Rippenanordnungs-Längsrichtung L-R verlaufen können. In Bezug auf den Ausdruck "entlang" kann hierbei insbesondere vorgesehen sein, dass zwischen der Orientierung der in der Rippenanordnungs-Längsrichtung L-R verlaufenden Kernschicht-Verstärkungsbereiche 37-1, 37-2, 37-3 eine lokale Winkelabweichung von maximal 30 Grad gegenüber der Orientierung der lokalen Rippenanordnungs-Längsrichtung L-R oder der Längsrichtung der Rippen-Anordnung R auftritt. Die Kernschicht-Verstärkungsbereiche 37 können krummlinig oder geradlinig verlaufen. In der Figur 5 ist die schublast-aufnehmende Kernschicht-Längsrichtung L-V beispielartig nur für einen Kernschicht-Verstärkungsbereich 37 eingetragen. Weiterhin sind quer zu den in der Rippenanordnungs-Längsrichtung L-R verlaufenden Kernschicht-Verstärkungsbereiche 37-1, 37-2, 37-3 verlaufende Kernschicht-Verstärkungsbereiche 37-4 vorgesehen. Somit sind zur Bildung der Beplankungsschale B insbesondere schublast-aufnehmende Kernschicht-Abschnitte 33a

Nach einem Ausführungsbeispiel des erfindungsgemäßen Strukturbauteils ist vorgesehen, dass in der schublast-aufnehmenden Kernschicht 33 entlang eines Umgebungsbereichs Z einer Mehrzahl von Kernschicht-Verstärkungsbereichen 37 der Beplankungsschale B erfindungsgemäße Verstärkungs-Vorrichtungen integriert sind (in der Figur 3 sind beispielsweise ein derartiger Umgebungsbereich oder Zwischenbereich mit dem Bezugszeichen Z versehen). Dabei sind die Verstärkungsteile und/oder Verstärkungs-Vorrichtungen 10 in der Längsrichtung L-V des Verstärkungsbereichs oder entlang der Längsrichtung des Zwischenbereichs Z hintereinander angeordnet. Dabei kann z. B. in einer sich zwischen jeweils zwei Rippen-Anordnungen R und/oder einer Rippen-Anordnung R und einem Randbereich 60 erstreckenden Beplankungsschale B vorgesehen sein, dass entlang und auf beiden Seiten der darin verlaufenden Kernschicht-Verstärkungsbereichen 37 in die schublastaufnehmende Kernschicht 33 der Beplankungsschale B Verstärkungsteile und/oder Verstärkungs-Vorrichtungen 10 integriert sind. Generell kann sich der Umgebungsbereich Z für die Anordnung der Verstärkungs-Vorrichtungen 10 entlang von dessen Längserstreckung auf beiden Seiten des Kernschicht-Verstärkungsbereichs 37 und bis zu einer Entfernung von maximal der zehnfachen und vorzugsweise maximal der doppelten Dicke der Beplankungsschale B an der jeweiligen Stelle des Kernschicht-Verstärkungsbereichs 37 erstrecken.

Die an Hand der Figuren 7, 8, 9, 10a, 10b beschriebenen Ausführungsbeispiele der Erfindung bewirken, dass sich Schäden in der schublast-aufnehmenden Kernschicht 33, falls diese auf einer ersten der Seiten des Kernschicht-Verstärkungsbereichs 37 auftreten, nicht durch über den Kernschicht-Verstärkungsbereichs 37 zu einer zweiten, der ersten Seite gegenüber liegenden Seite hinüberwandern kann.

Ein Aspekt der Erfindung bezieht sich auf eine hauptlast-tragende Beplankungsschale B für ein Strukturbauteil 1, die in ihrem sich flächig erstreckenden Innenbereich 50 als Sandwich-Bauteil derart gebildet ist, wie dies voranstehend beschrieben ist. Dieser Aspekt der Erfindung wird nachfolgend an Hand der Figuren 6 bis 11 beschrieben, die im Innenbereich 50 der Beplankungsschale B zeigt: die als Sandwich-Bauteil ausgeführte Beplankungsschale B mit einem inneren Hautabschnitt 51, einem äußeren Hautabschnitt 52 sowie einem zwischen diesen gelegenen schublast-aufnehmende Kernschicht 53, der den inneren 51 und den äußeren 52 Hautabschnitt flächig miteinander verbindet. Die Eigenschaften dieser Strukturkomponenten sind wie vorstehend beschrieben. Bei der Darstellung der Figuren 6 bis 10 werden für einige Bestandteile und Komponenten der jeweils dargestellten Ausführungsform dieselben Bezugszeichen wie in vorgehenden Figuren verwendet, wenn auf die jeweiligen Funktionalitäten oder Eigenschaften Bezug genommen wird.

Die Beplankungsschale B ist zum Anbringen derselben an ein Träger-Bauteil 5, 6 und/oder einer Rippenanordnung R mit einem äußeren Randabschnitt 60 mit einem äußeren Rand 61 ausgebildet, der aufweist: einen entlang des Rands 61 verlaufenden kernschichtfreien Anschlussbereich 63 mit dem inneren Hautabschnitt 51, dem äußeren Hautabschnitt 52. Bei den Ausführungsformen der Beplankungsschale nach den Figuren 6 bis 8 endet der Kernschichtbereich an dem Anschlussbereich 63, an dem die Hautabschnitte 51, 52 aufeinanderliegen. In diesem Bereich kann die Befestigung der Beplankungsschale mittels Verbindungselementen oder anders erfolgen. Bei den Ausführungsformen der Beplankungsschale nach den Figuren 9 und 10 ist eine zwischen den Hautabschnitten 51, 52 gelegene monolithische Zwischenschicht 65 vorgesehen. In dem äußeren Randabschnitt 60 ist ein Übergangsbereich 62 vorgesehen, in dem von dem Innenbereich 50 aus gesehen die schublast-aufnehmende Kernschicht 63 endet, d.h. in dem der äußere Rand 55 der schublast-aufnehmenden Kernschicht 53 gelegen ist oder verläuft. In dem Übergangsbereich 62 kann ein Bereich 66 vorgesehen sein, in dem sich die Dicke der monolithischen Zwischenschicht in Richtung zum äußeren Rand 61 zur Verringerung der Querschnittsdicke der Beplankungsschale verringert. In den Figuren 11 bis 14 ist eine Ausführungsform der Erfindung dargestellt, bei der im äußeren Randabschnitt 61 zwischen den Hautabschnitten 51, 52 keine monolithische Schicht gelegen ist, da sich die monotlithische Schicht im Übergangsbereich entsprechend verjüngt und vor dem äußeren Rand 61 endet.

Aus dem Vergleich der Figuren 6 bis 10 mit den Figuren 1 und 3 ist entnehmbar, dass der Rand 61 bzw. der Rand 55 entlang der Längsrichtung L-S des Strukturbauteils 1 verläuft und sich der Anschlussbereich 63 von dem Innenbereich 50 aus in der Breitenrichtung B-S des Strukturbauteils 1 erstreckt.

Erfindungsgemäß ist insbesondere vorgesehen, dass in einem Kernschicht-Endbereich 56 entlang des äußeren Randabschnitts 60 der Beplankungsschale B Verstärkungs-Vorrichtungen 10 integriert sind, die die schublast-aufnehmende Kernschicht 53 durchragen.

Die Beplankungsschale B nach diesem Aspekt der Erfindung kann insbesondere von einer Trägerstruktur T aufgenommen und an dieser befestigt sein, wie es hierin beschrieben wurde. Bei diesem Aspekt der Erfindung kann insbesondere auch vorgesehen sein, dass sich die Beplankungsschale B zwischen Trägerbauteilen 5, 6 und der Rippen-Anordnung R erstreckt, wie dies an Hand der Figur 1 voranstehend beschrieben worden ist. Optional kann dabei alternativ oder zusätzlich vorgesehen sein, dass die schublast-aufnehmende Kernschicht 53 aus mehreren in der Längserstreckung der schublast-aufnehmenden Kernschicht 53 nebeneinander angeordneten schublast-aufnehmenden Kernschicht-Abschnitten 53a (nicht in der Figur 6, 9 oder 10 gezeigt) gebildet ist, wie dies beschrieben worden ist. Die schublastaufnehmenden Kernschicht-Abschnitte sind dabei - wie beschrieben - miteinander jeweils an den einander anliegenden Seiten durch einen Kernschicht-Verstärkungsbereich 37 verbunden, der sich in der Längsrichtung L-V des Verstärkungsbereichs quer zur Längserstreckung der schublast-aufnehmenden Kernschicht 33 bzw. 63 durch diesen hindurch erstreckt.

Erfindungsgemäß kann weiterhin vorgesehen sein, dass von dem Innenbereich 60 aus gesehen vor der schublast-aufnehmenden Kernschichtfreien Anschlussbereich 63 ein Zwischenbereich 62 vorgesehen ist, in dem sich die Dicke der schublastaufnehmenden Kernschicht 53 in Richtung zum Rand 55 kontinuierlich verringert unter Ausbildung eines keilförmigen Abschnitts der monolithischen Zwischenschicht 65 zumindest zwischen der dem äußeren Hautabschnitt 52 zugewandten Seite der schublast-aufnehmenden Kernschicht 53 und dem äußeren Hautabschnitt 52 oder zwischen der dem inneren Hautabschnitt 51 zugewandten Seite der schublastaufnehmenden Kernschicht 53 und dem inneren Hautabschnitt 51. Bei dieser Ausführungsbeispiel kann insbesondere vorgesehen sein, dass in einem Kernschicht-Endbereich 56 entlang des äußeren Randabschnitts 30 der Beplankungsschale B Verstärkungs-Vorrichtungen 10; 10e, 10f nach einem hierin beschriebenen Ausführungsbeispiel integriert sind, die die schublast-aufnehmende Kernschicht und teilweise die beiden keilförmigen Abschnitte der monolithischen Zwischenschicht 65 durchragen.

Der Kernschicht-Endbereich 56 für die Anordnung der Verstärkungs-Vorrichtungen kann sich von dem Rand des Kernschichtendes aus bis zu einer Entfernung von maximal der vierfachen Dicke der Beplankungsschale B am Rand des Kernschichtendes erstreckt.

Generell können die Anordnung und/oder Gestaltung der Verstärkungs-Vorrichtungen für die verschiedenen Aspekte der Erfindung gleich ausgeführt sein. Generell kann vorgesehen sein, dass zumindest ein Teil der Verstärkungsteile 10; 10a, 10b, 10c, 10d; 10e, 10f und/oder Verstärkungs-Vorrichtungen derart im Kernschicht-Endbereich 56 angeordnet sind, dass deren Enden F1 den inneren Hautabschnitt 11 und/oder den äußeren Hautabschnitt 12 jeweils zumindest teilweise durchragen, wie dies in den Figuren 5a, 5b, 7, 8, 9, 10a, 10b und 11 gezeigt ist. Der innere Hautabschnitt 11 oder 51 (Figuren 11 bis 15) und/oder der äußere Hautabschnitt 12 oder 52 (Figuren 11 bis 15) können jeweils aus mehreren Hautlagen gebildet sein (nicht in den Figuren gezeigt). Dabei kann insbesondere vorgesehen sein, dass zumindest ein Teil der Verstärkungsteile und/oder Verstärkungs-Vorrichtungen 10a, 10b, 10c, 10d derart in der Beplankungsschale B angeordnet ist, dass deren Enden F1 den inneren Hautabschnitt 11 bzw. 51 und/oder den äußeren Hautabschnitt 12 bzw. 52 jeweils zumindest teilweise durchragen.

Alternativ oder zusätzlich kann vorgesehen sein, dass mehrere Verstärkungsteile 10; 10a, 10b, 10c, 10d; 10e, 10f den Verstärkungsbereich 37 jeweils zumindest teilweise durchragen. Dabei kann insbesondere vorgesehen sein, dass jeweils ein Ende F2 eines Verstärkungsteils den Verstärkungsbereich 37 durchragt oder in diesen eingesetzt ist (Figuren 7, 8 und 13).

Die Figur 3 zeigt eine Ausführungsform einer erfindungsgemäßen Kombination einer Trägerstruktur T mit einer Stützanordnung, die insbesondere eine insgesamt T-förmige Rippen-Anordnung R sein kann, und einer Beplankungsschale 22, die nach der Erfindung mit einem inneren, einem äußeren Hautabschnitt 11 bzw. 12 sowie einer zwischen diesen gelegenen schublast-aufnehmenden Kernschicht 13 gestaltet ist. Die Figur 3 ist eine Schnittdarstellung eines Bereichs S3 des Strömungskörpers 1 der Figuren 1 a und 1 b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer Beplankungsschale B ist. Die Beplankungsschale B ist nach einem Ausführungsbeispiel der Erfindung mit einem in Bezug auf den Strömungskörper 1 inneren Hautabschnitt 11 und einem äußeren Hautabschnitt 12 sowie einer zwischen diesen gelegenen schublast-aufnehmenden Kernschicht 13 gebildet. Erfindungsgemäß können in die Kernschicht 13 seitlich der Rippen-Anordnung R Verstärkungs-Vorrichtungen 10 oder Rippenanordnungs-Verstärkungsprofilteile eingesetzt sein. Generell kann die Trägerstruktur T auch eine Stützanordnung, lediglich eine Rippe 21 ohne plattenförmiges Verbindungsstück 22 aufweisen, oder eine Stützanordnung sein, die lediglich ein plattenförmiges Verbindungsstück 22 aufweist.

Erfindungsgemäß kann dabei vorgesehen sein, dass in der Beplankungsschale B entlang eines quer zur Rippenanordnungs-Längsrichtung L-R verlaufenden Beplankungsschalen-Abschnitts, der einen Anschlussbereich 14 der Trägerstruktur T, also z. B. eines Trägerbauteils 5, 6 und/ oder der Rippen-Anordnung R an der Beplankungsschale B bildet, ein oder mehrere Profilträger oder Rippenanordnungs-Verstärkungsprofilteile V0 eingebracht oder integriert sind. Beispielsweise sind zur Verstärkung der Beplankungsschale B im Anschlussbereich eines Trägerbauteils 5, 6 an derselben oder im Anschlussbereich einer Stützanordnung oder Rippenanordnung R Profilträger als Trägerbauteil-Verstärkungsprofilträger oder -Verstärkungsprofilteile bzw. Rippenanordnungs-Verstärkungsprofilträger oder -Verstärkungsprofilteile angeordnet. Der Anschlussbereich 14 ist derjenige Bereich der Beplankungsschale B in dessen flächiger Erstreckung, der in der Dickenrichtung D-B der Beplankungsschale B gesehen den Bereich überdeckt oder schneidet, den die Trägerstruktur T oder das Trägerbauteil 5, 6 bzw. die Stütz- oder Rippen-Anordnung R mit ihrer der Beplankungsschale B zugewandten Seite umgrenzt oder in deren Grenzen die jeweilige Trägerstruktur T an der Beplankungsschale B anliegt. Die der Beplankungsschale B zugewandte Seite der Trägerstruktur T ist im gezeigten Ausführungsbeispiel mit der Rippen-Anordnung R die der Beplankungsschale B zugewandte Seite des Flanschteils der Rippen-Anordnung R. Die Profilträger V0 verbinden das Flanschteil 22 oder den inneren Hautabschnitt 11 und den äußeren Hautabschnitt 12 zur Stabilisierung der Beplankungsschale B bei Beschädigung derselben von außen miteinander.

Der zumindest eine oder die Profilträger V0 können als längliche oder plattenförmige Verstärkungsprofilträger ausgebildet sein. Dabei können sich die Profilträger V0 in einer Referenz-Längsrichtung erstrecken, die in der Längserstreckung der jeweiligen Trägerstruktur T gerichtet ist. Die Längserstreckung der Trägerbauteile nach der Figur 1 a verläuft entlang des an diesem anliegenden Randbereichs der Beplankungsschale B, so dass in dieser Hinsicht die Referenz-Längsrichtung der Profilträger V0 entlang des Randbereichs der Beplankungsschale B verläuft. Die Referenz-Längsrichtung einer Stützanordnung oder einer Rippenanordnung R verläuft in Richtung der Längserstreckung derselben und insbesondere entlang der Stützanordnungs- bzw. Rippenanordnungs-Längsrichtung L-R, d.h. parallel zu der Stützanordnungs- bzw. Rippenanordnungs-Längsrichtung L-R oder schräg zu dieser. Bei dem Vorsehen von mehreren Profilträgern V0 können diese insbesondere in einer Referenz-Längsrichtung gesehen, die im gezeigten Ausführungsbeispiel die Rippenanordnungs-Längsrichtung L-R ist, nebeneinander angeordnet sein und nebeneinander verlaufen.

Die Referenz-Längsrichtung ist dabei die Erstreckungsrichtung eines mittels der Profilträger V0 zu verstärkenden oder für Belastungsfälle zu stabilisierenden Bereichs. Insbesondere kann der zur verstärkende oder zu stabilisierende Bereich der Anschlussbereich einer Trägerstruktur T wie eines Trägerbauteils 5, 6 oder einer Rippenanordnung R sein. Dieser kann insbesondere der Verbindungsbereich von Flanschteil 22 und der Beplankungsschale B sein. Durch das Vorsehen der Profilträger V0 werden in dem der Rissbildungen in der Kernschicht 13 aufgrund von größeren Spannungen in der Kernschicht 13, die sich durch äußere Belastungen in diesem Bereich ergeben, vermieden und/oder lokal aufgehalten. Berechnungen und umfangreiche Versuche haben den positiven Effekt dieser erfindungsgemäßen Lösungsmaßnahme aufgezeigt.

Unter der Rippenanordnungs-Längsrichtung L-R ist dabei die Richtung zu verstehen, die entlang der Längserstreckung der Beplankungsschale B und der Längsrichtung der Rippe 21 verläuft. Bei dem Vorsehen mehrerer Rippen kann die Rippenanordnungs-Längsrichtung L-R insbesondere entlang der Längsrichtung einer dieser Rippen oder einer Hauptrippe verlaufen. Unter der Rippenanordnungs-Querrichtung Q-R ist diejenige Richtung zu verstehen, die senkrecht zu der Rippenanordnungs-Längsrichtung L-R und die quer zur Längserstreckung der Beplankungsschale B und in Breitenrichtung, also der Haupterstreckung der Rippe 21 verläuft. In der Figur 3 ist auch die Rippenanordnungs-Breitenrichtung B-R gezeigt, die senkrecht zu der Rippenanordnungs-Längsrichtung L-R und der Rippenanordnungs-Querrichtung Q-R gerichtet ist.

Bei dem in der Figur 3 gezeigten Ausführungsbeispiel sind mehrere Rippenanordnungs-Verstärkungsprofilteile V0 in der Rippenanordnungs-Breitenrichtung B-R gesehen hintereinander bzw. in der Rippenanordnungs-Längsrichtung L-R gesehen nebeneinander angeordnet. In der Figur 3 ist eine Ausführungsform der Rippen-Anordnung R gezeigt, bei der über den gesamten Verbindungsbereich von Flanschteil 22 und der Beplankungsschale B Rippenanordnungs-Verstärkungsprofilteile V0 verteilt sind. In dem in der Figur 3 dargestellten Querschnitt eines Ausführungsbeispiels der Rippen-Anordnung R sind insgesamt zehn Rippenanordnungs-Verstärkungsprofilteile V0 in der Rippenanordnungs-Längsrichtung L-R gesehen nebeneinander gelegen. In der Figur 3 sind die an den in der Rippenanordnungs-Längsrichtung L-R gesehen jeweils äußeren Verstärkungsprofilträger V0 mit den Bezugzeichen V1, V3 bzw. V2, V4 bezeichnet. Generell können die Rippenanordnungs-Profilteile V0 insbesondere in gleichmäßigen Abständen im gesamten Bereich des Flanschteils 22 oder über einen Abschnitt des Flanschteils 22 verteilt sein.

Bei einer in der Figur 3b dargestellten Ausführungsform des Verstärkungsprofilträgers V0 kann dieser (Bezugszeichen VA) aus zwei Profilplatten VA-1, VA-2, von denen einer mit dem inneren Hautabschnitt 11 und der jeweils andere mit dem äußeren Hautabschnitt 12 verbunden ist, und einer diese verbindenden Stützrippe VA-3 gebildet sein, so dass dessen Profilquerschnitt ein Doppel-T-Profilquerschnitt ist.

Bei einer in der Figur 4b dargestellten Ausführungsform des Verstärkungsprofilträgers V0 kann dieser (Bezugszeichen VB) derart ausgeführt sein, dass der Profilquerschnitt des Verstärkungsprofilträgers ein Kasten-Profilquerschnitt ist. Dabei kann der Verstärkungsprofilträger VB aus zwei Profilplatten VB-1, VB-2, von denen einer mit dem inneren Hautabschnitt 11 und der jeweils andere mit dem äußeren Hautabschnitt 12 verbunden ist, und zwei diese verbindenden Stützrippen VB-3, VB-4 zur Bildung eines Kasten-Profilquerschnitts gebildet sein.

Durch die Anordnung der Verstärkungs-Vorrichtung 10 entlang der Rippen-Anordnung R wird erreicht, dass sich Beschädigungen der Beplankungsschale B z. B. in Form von Rissen in der schublast-aufnehmenden Kernschicht 13 im Bereich der Rippen-Anordnung R nicht oder in reduziertem Maße auf den sich neben der Rippen-Anordnung R erstreckenden flächigen Bereich der Beplankungsschale B übertragen. Auch wird umgekehrt durch die Anordnung der Verstärkungs-Vorrichtung 10 entlang der Rippen-Anordnung R erreicht, dass sich Beschädigungen der Beplankungsschale B z. B. in Form von Rissen in der schublast-aufnehmenden Kernschicht 13 im neben der Rippen-Anordnung R erstreckenden flächigen Bereich der Beplankungsschale B auf den im Bereich der Rippen-Anordnung R gelegenen Bereich der Beplankungsschale B nicht oder in reduziertem Maße übertragen.

Nach einem Ausführungsbeispiel des erfindungsgemäßen Strukturbauteils 1 sind zwischen in der Rippenanordnungs-Längsrichtung L-R gesehen nebeneinander gelegenen Rippenanordnungs-Verstärkungsprofilteilen V0 der Rippen-Anordnung R zumindest eine Verstärkungs-Vorrichtung 10 angeordnet. Nach dem in der Figur 3 gezeigten Ausführungsbeispiel sind in der Rippenanordnungs-Querrichtung Q-R gesehen zwischen den äußeren Rippenanordnungs-Verstärkungsprofilteilen V1 und V3 bzw. V2 und V4 Verstärkungs-Vorrichtungen 10 nach der Erfindung angeordnet. Diese Konstellation kann in der Rippenanordnungs-Längsrichtung L-R mehrfach hintereinander vorgesehen sein. Auch kann zwischen mehreren, also z. B. zwischen zwei, drei oder vier äußeren Rippenanordnungs-Verstärkungsteilen jeweils zumindest ein Verstärkungsteil und/oder eine Verstärkungs-Vorrichtung 10 nach der Erfindung angeordnet sein. Dabei können die Verstärkungs-Vorrichtung 10 und die jeweils zugeordneten Rippenanordnungs-Verstärkungsteile auch in der Rippenanordnungs-Querrichtung Q-R gesehen versetzt zueinander angeordnet sein. Bei diesen Ausführungsbeispielen treten diese Konstellationen vorzugsweise in der Rippenanordnungs-Längsrichtung L-R hintereinander liegend wiederholt auf und können sich über die Länge der Rippen-Anordnung R in der Beplankungsschale B verteilen.

Bei der erfindungsgemäßen Kombination einer Beplankungsschale B und einer Rippenanordnung R können auch Verstärkungsteile und/oder zumindest eine Verstärkungsvorrichtung 10 anstelle von Rippenanordnungs-Verstärkungsprofilteilen V0 in die Beplankungsschale nach einer der hierin beschriebenen Arten angeordnet sein.

In der Figur 3 ist schematisch eine Rissbildung im Schaumkern 13 dargestellt: ein Gegenstand F1 schlägt mit einem Impuls F auf der Beplanungsschale B auf, Die dabei entstehenden Risse im Schaumkern 13 sind mit den Bezugszeichen F3 und F4 gezeigt.

Bei den erfindungsgemäß vorgesehenen Ausführungsformen der Beplankungsschale B können die Verstärkungs-Vorrichtungen 10 generell jeweils aus zumindest einem Verstärkungsteil gebildet sein. Dabei kann ein Verstärkungsteil als stiftförmiges Verstärkungsteil mit z. B. runder oder rechteckiger Querschnittsform ausgeführt sein.

Die Verstärkungsvorrichtungen 10 sind jeweils aus zumindest einem Verstärkungsteil 10a, 10b, 10c, 10d, 10e, 10f gebildet. Ein solches Verstärkungsteil 10a, 10b, 10c, 10d, 10e, 10f kann insbesondere als längliches und/ oder plattenförmiges Element gebildet sein. Die Verstärkungsteile 10a, 10b, 10c, 10d, 10e, 10f somit insbesondere pinförmig oder nadelförmig gestaltet sein. In den Figuren 2, 5a, 5b, 9, 10a, 10b sind die jeweils dargestellten Verstärkungsteile 10a, 10b, 10c, 10d, 10e, 10f mit den Bezugszeichen 10a, 10b, 10e oder 10f bezeichnet.

Nach einer weiteren, in der Figur 5c dargestellten erfindungsgemäßen Ausführungsform der Kombination der Beplankungsschale B und eines Trägerbauteils 5, 6 und/ oder der Rippen-Anordnung R an der Beplankungsschale B kann vorgesehen sein, dass in dem Anschlussbereich 14 der Beplankungsschale B und optional in der Breitenrichtung B-R seitlich neben diesem Verstärkungsteile 10a, 10b, 10c, 10d, 10e, 10f oder Verstärkungsvorrichtungen 10 insbesondere nach einer erfindungsgemäß vorgesehenen und/oder hierin beschriebenen Art angeordnet sind. Dabei ist insbesondere vorgesehen, dass in dem Anschlussbereich 14 keine Profilteile eingesetzt sind (Figur 5c). Dabei können Verstärkungsteile 10a, 10b, 10c, 10d, 10e, 10f oder Verstärkungsvorrichtungen 10 in einer Reihe in der Breitenrichtung B-R der Rippenanordnung oder in der Breitenrichtung des Trägerbauteils nebeneinander und/ oder in der Längsrichtung L-R der Rippenanordnung bzw. in der Längsrichtung des Trägerbauteils angeordnet sein. In diesen Fällen können, wie es in der Figur 5c dargestellt ist, auch Paare von Verstärkungsteilen 10a, 10b, 10c, 10d, 10e, 10f in jeweils X-förmiger Anordnung in die Beplankungsschale B eingebracht sein.

Die Verstärkungsteile verlaufen generell in der Dickenrichtung der Beplankungsschale B oder schräg zu dieser und können dabei innerhalb der Kernschicht 13 derart gelegen sein, dass ihre Enden F1 zu den Hautabschnitten 11, 12 beabstandet sind oder eines ihrer Enden F1 zu einem der Hautabschnitte 11, 12 beabstandet ist, oder die Verstärkungsteile können derart gelegen sein, dass diese den inneren und den äußeren Hautabschnitt 11, 12 jeweils verbinden, also in den inneren und/ oder äußeren Hautabschnitt 11, 12 teilweise eindringen. Der innere Hautabschnitt 51 und/oder der äußere Hautabschnitt 52 kann jeweils aus mehreren Hautlagen gebildet und/oder zumindest ein Teil der Verstärkungs-Vorrichtungen 10, 10a, 10b, 10c, 10d; 10e, 10f können derart angeordnet sein, dass deren Enden F1 oder eines der Enden F1 derselben den inneren Hautabschnitt 51 und/oder den äußeren Hautabschnitt 52 jeweils zumindest die erste Hautlage durchragen. Generell durchragen also die Verstärkungsteile zumindest teilweise die schublast-aufnehmende Kernschicht 13.

Die Verstärkungsteile können insbesondere derart in der Beplankungsschale B gelegen sein, dass der Winkel zwischen der Längsrichtung des jeweiligen Verstärkungsteils und der Dickenrichtung der Beplankungsschale an dieser Stelle innerhalb eines Bereichs zwischen 45 Grad und 10 Grad liegt.

Die nach der Erfindung vorgesehenen Verstärkungsvorrichtungen 10 können generell in einer Referenz-Längsrichtung gesehen, die im gezeigten Ausführungsbeispiel die Rippenanordnungs-Längsrichtung L-R ist, hintereinander angeordnet sein. Weiterhin können Verstärkungsteile V auch quer zur Referenz-Längsrichtung bzw. Rippenanordnungs-Längsrichtung L-R gesehen hintereinander angeordnet sein. Dabei können Verstärkungsvorrichtungen 10 in mehreren nebeneinander verlaufenden Reihen von Verstärkungsvorrichtungen 10 angeordnet sein. Solche Reihen von Verstärkungsvorrichtungen 10 können auch einander kämmend (Figur 10b) angeordnet sein, bei denen die Verstärkungsvorrichtungen 10 sich in ihrer Erstreckung in der Referenz-Längsrichtung bzw. Rippenanordnungs-Längsrichtung L-R überlappen, wobei die Verstärkungsvorrichtungen 10 auch in der Referenz-Längsrichtung bzw. Rippenanordnungs-Längsrichtung L-R beabstandet gelegen sein können. Es können also insbesondere mehrere Reihen von Verstärkungsteilen nebeneinander verlaufen.

Die Referenzrichtung hinsichtlich der Anordnung von Verstärkungsvorrichtungen 10 oder Verstärkungsteilen ist die Erstreckungsrichtung eines mittels einer Mehrzahl von Verstärkungsvorrichtungen 10 bzw. Verstärkungsteilen zu verstärkenden oder für Belastungsfälle zu stabilisierenden Bereichs. Dieser Bereich wird nachfolgend auch als Verstärkungsbereich oder Zwischenbereich Z bezeichnet. Insbesondere kann der zur verstärkende oder zu stabilisierende Bereich z. B. seitlich oder innerhalb und/oder entlang eines Anschlussbereichs eines Trägerteils wie einer Rippenanordnung oder entlang eines Randbereichs verlaufen und dabei ein Übergangsbereich von dem Anschlussbereich bzw. dem Randbereich in den flächigen Ersteckungsbereich der Beplankungsschale B sein, in dem Rissbildungen in der Kernschicht 13 aufgrund von sich in diesem Bereich ergebenden größeren Spannungen in der Kernschicht 13 vermieden oder lokal aufgehalten werden. Berechnungen und umfangreiche Versuche haben den positiven Effekt auch dieser erfindungsgemäßen Lösungsmaßnahme aufgezeigt.

Bei dem in der Figur 3 dargestellten Ausführungsbeispiel einer Anbringung der Beplankungsschale B an einer Rippenanordnung R und in den Figuren 5a, 5b, 9, 10a, 10b dargestellten Verstärkungsteilen sind diese jeweils schematisch als Strichlinie gestrichelt dargestellt, wobei im dargestellten Schnitt mit durchgezogenem Strich in der Schnittfläche befindliche Verstärkungsteile und mit gestricheltem Strich in einer von dieser Schnittebene beabstandeten Schnittebene angeordnete Verstärkungsteile dargestellt sind.

Generell können die sind Verstärkungsteile bzw. die Verstärkungsvorrichtungen entlang der genannten Referenz-Längsrichtung hintereinander und in einer Reihe oder in mehreren Reihen nebeneinander angeordnet sein. Bei dem in der Figur 3 dargestellten Ausführungsbeispiel sind Verstärkungsteile entlang der genannten Referenz-Längsrichtung und z. B. der Rippenanordnungs-Längsrichtung L-R hintereinander angeordnet. Dabei können die pinförmigen Elemente in einer geraden Linie hintereinander oder in der Rippenanordnungs-Längsrichtung L-R gesehen versetzt zueinander gelegen sein, d.h. auch einen Abstand zueinander quer zur Längserstreckung der Beplankungsschale B haben.

Bei diesem Ausführungsbeispiel der Figur 3 ist weiterhin vorgesehen, dass Verstärkungsteile 10a, 10b innerhalb von zwei Seitenbereichen Z1, Z2 der Beplankungsschale B angeordnet sind, die in Rippenanordnungs-Längsrichtung L-R und seitlich entlang der seitlichen Enden des Beplankungsschalen-Abschnitts 14 verlaufen und deren Breite sich jeweils quer zur Rippenanordnungs-Längsrichtung L-R und in der Längserstreckung der Beplankungsschale B erstreckt.

Alternativ oder zusätzlich kann vorgesehen sein, dass Verstärkungsteile 10a, 10b in einem Verstärkungsbereich eingebracht sind, die innerhalb des Beplankungsschalen-Abschnitts 14 und seitlich entlang der seitlichen Enden des Beplankungsschalen-Abschnitts 14 in die Kernschicht 13 gelegen sind. In der Figur 3 sind solche Gruppen von Verstärkungsteilen mit dem Bezugszeichen V3 und V4 bezeichnet.

Generell können die Ausführungsformen der erfindungsgemäßen Beplankungsschale B zur Beeinflussung von Schubspannungen und zur Vermeidung von Rissbildungen in der Kernschicht 13 eine Mehrzahl von zumindest in einem Verstärkungsbereich oder Zwischenbereich Z der Beplankungsschale B angeordneten Verstärkungs-Vorrichtungen 10 aufweisen, die jeweils aus einer Kombination von zumindest zwei in einem zusammenhängenden Volumenteil V (Figur 2) der Beplankungsschale B angeordneten Verstärkungsteilen gebildet sind. Der zumindest eine Zwischenbereich Z der Beplankungsschale B ist in Größe und Lage derart gewählt, dass dieser die gesamte Beplankungsschale B aufgrund der im gegebenen Anwendungsfall vorgesehenen äußeren Belastungen stabilisiert, indem die in dem jeweiligen Zwischenbereich Z aufgrund dieser Belastungen entstehenden Schubspannungen durch das Vorhandensein der Verstärkungsteile nicht zur Rissbildung in der Kernschicht 13 dieses Zwischenbereichs Z führen oder eine Rissbildung aufhalten. Dabei ist die Lage und Größe des zumindest einen Zwischenbereichs Z und die Art der Anordnung der Verstärkungsteile darin vorzugsweise so gewählt, dass nicht nur innerhalb, sondern auch außerhalb des Zwischenbereichs Z die Gefahr der Rissbildung in der Kernschicht 13 der Beplankungsschale B minimiert wird. Die Lage und Größe des zumindest einen Zwischenbereichs Z hängt dabei vom Anwendungsfall, d.h. der Gestalt des gesamten Strukturbauteils mit der Beplankungsschale B, mit den zugehörigen angenommenen äußeren Belastungen ab.

Nach einer Ausführungsform der Erfindung können die Verstärkungsteile der Verstärkungsvorrichtungen 10 gruppenweise angeordnet sein. Dabei kann insbesondere vorgesehen sein, dass die Verstärkungsteile 10a, 10b, 10c, 10d oder 10e, 10f einer Verstärkungs-Vorrichtung 10 gruppenweise in jeweils einem von mehreren Volumenteilen V der Beplankungsschale B angeordnet sind (Figur 2), wobei generell jede Gruppe von Verstärkungsteilen 10a, 10b, 10c, 10d oder 10e, 10f in jeweils einem fiktiven Volumenteil V jeweils aus einer Kombination von zumindest zwei Verstärkungsteilen 10a, 10b, 10c, 10d oder 10e, 10f gebildet ist. Somit sind in jeweils einem zusammenhängenden Volumenteil V der Beplankungsschale B eine Gruppe von Verstärkungsteilen angeordnet. Die Verstärkungsteile 10a, 10b, 10c, 10d oder 10e, 10f einer Gruppe derselben haben jeweils eine ähnliche Lage oder Orientierung innerhalb der Beplankungsschale B und haben jeweils mit einer Abweichung von maximal 30 Grad dieselbe Orientierung relativ zur Dickenrichtung D-B der Beplankungsschale B. Insbesondere kann weiterhin vorgesehen sein, dass die Ausrichtungen der Verstärkungsteile einer Gruppe relativ zu den weiteren Koordinatenrichtungen L-B, B-B der Beplankungsschale B zyklisch vorgesehen sind.

Ein Beispiel einer Gruppe von vier Verstärkungsteilen 10a, 10b, 10c, 10d mit einer untereinander zyklischen Orientierung ist in der Figur 2 dargestellt. In der Figur 2 ist ein Ausführungsbeispiel eines solchen fiktiven Volumenteils V in Form eines Quaders mit den Kantenlinien K dargestellt. Zur Orientierung ist in der Figur 2 auch die Längsrichtung L-Z des Zwischenbereichs Z sowie das Koordinatensystem der Beplankungsschale mit deren Koordinatenachsen L-B, B-B und D-B dargestellt. Die Anordnung der Verstärkungs-Vorrichtungen 10 ist insbesondere in der Längsrichtung L-Z des Zwischenbereichs Z hintereinander vorgesehen. In dem Ausführungsbeispiel nach der Figur 2 ist die dort dargestellte Verstärkungs-Vorrichtung 10 aus einer Kombination von vier Verstärkungsteilen 10a, 10b, 10c, 10d gebildet, wobei bei der Kombination der Verstärkungsteile 10a, 10b, 10c, 10d diese jeweils mit einer Abweichung von maximal 10 Grad dieselbe Orientierung in Bezug auf die Dickenrichtung D-B der Beplankungsschale B haben und wobei die Ausrichtungen der Verstärkungsteile in Bezug auf die weiteren Koordinatenrichtungen L-B, B-B der Beplankungsschale B zyklisch ist.

Dabei können die Verstärkungs-Vorrichtungen 10 oder eine Mehrzahl von Verstärkungs-Vorrichtungen 10 nach der Erfindung generell auf einer entlang, d.h. parallel oder winklig, zu der Referenzlinie oder der Rippenanordnungs-Längsrichtung L-R verlaufenden gedachten Linie hintereinander und/oder auch quer zur Rippen-Längsrichtung L-R gesehen versetzt zueinander gelegen sein.

In einem speziellen Fall kann eine Gruppe von Verstärkungsteilen aus zwei Verstärkungsteilen 10e, 10f gebildet sein, die in der genannten Referenz-Längsrichtung gesehen in etwa X-förmig zueinander angeordnet sind. Bei dieser Ausführungsform der Beplankungsschale B ist also zumindest ein Teil der Verstärkungs-Vorrichtungen 10 aus Paaren von Verstärkungsteilen 10a, 10b, 10c, 10d; 10e, 10f gebildet, deren Verstärkungsteile in Richtung einer Längserstreckung der Beplankungsschale B gesehen paarweise X-förmige Orientierungen aufweisen. Bei einer solchen Gruppe von X-förmigen Verstärkungsteilen können die beiden Verstärkungsteile voneinander beabstandet angeordnet sein oder auch aneinander anliegen oder als kreuzförmiges Gebilde in die Beplankungsschale B eingebracht sein. Beispielsweise sind mehrere Paare der auf jeweils einer der beiden Seiten Z1, Z2 gelegenen Verstärkungs-Vorrichtungen 10 derart zueinander orientiert, dass jeweils eines dieser Paare eine in der Rippenanordnungs-Längsrichtung L-R gesehen X-förmige Verstärkungsvorrichtung bildet.

Die Verstärkungs-Vorrichtungen 10 können in verschiedener Weise gestaltet und ausgeführt sein. Nach einem erfindungsgemäßen Ausführungsbeispiel ist vorgesehen, dass die Verstärkungs-Vorrichtungen 10 aus einer Mehrzahl von Kombinationen von pinförmigen Verstärkungsteilen 10e, 10f gebildet sind, die in der Rippenanordnungs-Längsrichtung L-R gesehen hintereinander gelegen sind, wobei jedes Paar von Verstärkungsteilen 10e, 10f in einem erfindungsgemäßen Volumenteil V angeordnet ist. Auch können ein Teil oder sämtliche der in einer Beplankungsschale B oder einem Bereich derselben eingebrachten Verstärkungsteile nadelförmig gestaltet sein. Weiterhin können die Verstärkungsteile an einem ihrer Enden oder an beiden ihrer Enden jeweils mit einer fußartigen Verbreiterung oder einem Haken versehen sein, die bzw. der zur Positionierung und/oder räumlichen Fixierung oder Verankerung innerhalb der Beplanungsschale B vorgesehen sein kann. Ein Vorteil dieser Gestaltung von Verstärkungsteilen kann darin liegen, dass bei dem Auftreten einer äußeren dynamischen Schadensbelastung die jeweiligen Verstärkungsteile in der Beplankungsschale B fixiert bleiben.

Alternativ dazu können die Verstärkungs-Vorrichtungen aus einer Mehrzahl von Kombinationen von plattenförmigen Verstärkungsteilen (nicht in den Figuren gezeigt) gebildet sein, die sich jeweils in ihrer ersten Längserstreckung zwischen dem zwischen dem inneren Hautabschnitt 11 und dem äußeren Hautabschnitt 12 erstrecken und sich durch die zwischen diesen gelegenen schublast-aufnehmenden Kernschicht 13 hindurch erstrecken. Diese plattenförmigen Verstärkungsteile erstrecken sich in ihrer senkrecht zu der ersten Längserstreckung verlaufenden Längserstreckung in der Rippenanordnungs-Längsrichtung L-R.

Die z. B. pinförmigen oder plattenförmigen Verstärkungsteile 10e, 10f insbesondere von jeweiligen Paaren derselben können dabei aneinander anliegen. Auch können pinförmigen oder plattenförmigen Verstärkungsteile 10e, 10f insbesondere von jeweiligen Paaren derselben in der Rippenanordnungs-Längsrichtung L-R voneinander beabstandet sein. Nach einem Ausführungsbeispiel kann dabei vorgesehen sein, dass der Abstand der pinförmigen oder plattenförmigen Verstärkungsteile 10e, 10f jeweils eines Paares derselben maximal das 1,5-fache Dicke der Beplankungsschale B an der jeweiligen Stelle beträgt.

Bei der Ausbildung der Verstärkungs-Vorrichtungen als plattenförmige Verstärkungsteile können zwei oder mehrere derselben auch in der Rippenanordnungs-Längsrichtung L-R gesehen jeweils ineinander greifend angeordnet sind.

Bei den Ausführungen der Verstärkungs-Vorrichtungen 10 nach der Erfindung können die Verstärkungs-Vorrichtungen 10 oder eine Mehrzahl derselben sich auch durch den inneren Hautabschnitt 11 und dem äußeren Hautabschnitt 12 hindurch erstrecken oder in diesen jeweils mit einem Endabschnitt verankert sein. Alternativ oder zusätzlich können Verstärkungs-Vorrichtungen 10 oder eine Mehrzahl derselben mit ihren jeweiligen den Hautabschnitten zugewandten Endabschnitten an dem inneren Hautabschnitt 11 und dem äußeren Hautabschnitt 12 anliegen oder in einem Abstand zu diesen jeweils enden.

Generell kann vorgesehen sein, dass zumindest ein Teil der Verstärkungs-Vorrichtungen 10; 10a, 10b, 10c, 10d; 10e, 10f derart in der Beplankungsschale B angeordnet sind, dass deren Enden F1 den inneren Hautabschnitt 11 und/oder den äußeren Hautabschnitt 12 jeweils zumindest teilweise durchragen, wie dies in den Figuren 5a, 5b, 7, 8, 9, 10a, 10b und 11 gezeigt ist. Der innere Hautabschnitt 11 oder 51 (Figur 11) und/oder der äußere Hautabschnitt 12 oder 52 (Figur 11) können jeweils aus mehreren Hautlagen gebildet sein (nicht in den Figuren gezeigt). Dabei kann insbesondere vorgesehen sein, dass zumindest ein Teil der Verstärkungs-Vorrichtungen 10a, 10b, 10c, 10d derart in der Beplankungsschale B angeordnet ist, dass deren Enden F1 den inneren Hautabschnitt 11 bzw. 51 und/oder den äußeren Hautabschnitt 12 bzw. 52 jeweils zumindest teilweise durchragen.

Die Verstärkungsteile können nach der Erfindung generell aus einem metallischen Material und/oder aus einem nicht-metallischen Material und insbesondere aus einem Faserverbund-Kunststoff gebildet sein. Als nicht-metallisches Material kann Carbon, Fiberglas, Quarz, Kevlar und/oder Keramik verwendet werden.

Nach einer weiteren Ausführungsform des erfindungsgemäßen Strukturbauteils weist die schublast-aufnehmende Kernschicht 13 zumindest einen Kernschicht-Verstärkungsbereich 37 und vorzugsweise eine Mehrzahl von Kernschicht-Verstärkungsbereichen 37 auf (Figur 4), mit der bzw. mit denen mehrere in der Längserstreckung der schublast-aufnehmenden Kernschicht 33 oder der Schaumschicht nebeneinander angeordnete schublast-aufnehmenden Kernschicht-Abschnitte 33a verbunden werden. Jeder Kernschicht-Verstärkungsbereich 37 erstreckt sich in einer Längsrichtung L-V (Figur 3) quer zur Längserstreckung der schublast-aufnehmenden Kernschicht 13 durch diesen hindurch und verläuft dabei zwischen dem inneren Hautabschnitt 11 und dem äußeren Hautabschnitt 12. In der Figur 3 ist ein Ausführungsbeispiel des erfindungsgemäßen Strukturbauteils dargestellt, wobei mit gestrichelten Linien die Randlinien der einzelnen schublastaufnehmenden Kernschicht-Abschnitten 33a bzw. der Verlauf der Kernschicht-Verstärkungsbereiche 37 angezeigt sind. In der Ausführungsform des Strukturbauteils nach der Figur 3 sind die Verläufe der Kernschicht-Verstärkungsbereiche 37 derart vorgesehen, dass sich rechteckige schublast-aufnehmende Kernschicht-Abschnitte 33a ergeben oder dass sich umgekehrt die Kernschicht aus Kernschicht-Abschnitten 33a zusammensetzt, die über Kernschicht-Verstärkungsbereiche 37 miteinander verbunden sind. Dabei kann insbesondere vorgesehen sein, dass der Kernschicht-Verstärkungsbereich 37 mit dem inneren Hautabschnitt 11 und dem äußeren Hautabschnitt 12 verbunden ist, so dass der Kernschicht-Verstärkungsbereich 37 an dem inneren Hautabschnitt 11 und dem äußeren Hautabschnitt 12 befestigt sind.

Nach einer Ausführungsform der Beplankungsschale B beträgt die Dicke 17a des Kernschicht-Verstärkungsbereichs 37 zwischen dem 0,1- und dem 2,0-fachen der Breite der Beplankungsschale B an dieser Stelle, wobei die Dicke senkrecht zur Längserstreckung der Beplankungsschale gemessen ist.

Durch in dem Kernschicht-Verstärkungsbereich 37 eingebrachte Verstärkungsvorrichtunge 10 kann die Übertragung einer Beschädigung der Beplankungsschale B insbesondere in Form von Rissen in der schublastaufnehmenden Kernschicht von einer Seite des Kernschicht-Verstärkungsbereichs 37 auf die jeweils andere Seite des Kernschicht-Verstärkungsbereichs 37 effektiver verhindert oder aufgehalten werden.

Der Verstärkungsbereich ist aus einem Material gebildet, das eine mindestens zweifache Steifigkeit aufweist als die schublastaufnehmende Kernschicht 13. Dabei kann der Kernschicht-Verstärkungsbereich 37 insbesondere aus Harz gebildet sein.

Bei einer erfindungsgemäßen Ausführungsform der Beplankungsschale B mit einer Rippen-Anordnung R kann auch vorgesehen sein, dass mehrere nach einer Ausführungsform der Erfindung ausgeführte und entlang der Rippenanordnungs-Längsrichtung L-R hintereinander gelegene Verstärkungsteile 10 den zumindest einen Kernschicht-Verstärkungsbereich 37 jeweils durchragen. Der Kernschicht-Verstärkungsbereich 37 kann sich insbesondere in seiner Längsrichtung entlang der Rippenanordnungs-Längsrichtung L-R und entlang eines Abschnitts oder entlang der gesamten Länge der Rippen-Anordnung R erstrecken. Der Kernschicht-Verstärkungsbereich 37 kann dabei parallel oder winklig zur Rippenanordnungs-Längsrichtung L-R verlaufen. Zumindest ein Kernschicht-Verstärkungsbereich 37 mit an diesem angeordneten Verstärkungsvorrichtungen kann insbesondere in zumindest einem der zwei in Rippenanordnungs-Längsrichtung L-R verlaufenden Seitenbereiche Z1, Z2 vorgesehen sein.

An derartigen Verstärkungsbereichen 37 kann eine Mehrzahl von Verstärkungsvorrichtungen 10 nach einer Ausführungsform der Erfindung angeordnet sein. In der Figur 7 ist ein Ausführungsbeispiel dargestellt, bei der eine Anordnung oder ein Paar von Verstärkungsteilen 10 bzw. 10e, 10f in einer X-förmigen Anordnung einen Kernschicht-Verstärkungsbereich 37 durchragen, wobei jeweils ein Mittelabschnitt eines Verstärkungsteile 10e, 10f innerhalb des Kernschicht-Verstärkungsbereichs 17 gelegen ist. In der Figur 7 sind die zwei Verstärkungsteile einer X-förmigen Anordnung derselben mit den Bezugszeichen 10e und 10f versehen. Insbesondere kann vorgesehen sein, dass eine Mehrzahl von X-förmigen Anordnungen von Verstärkungsteilen 10 in der Längsrichtung des Kernschicht-Verstärkungsbereichs 37 als Referenz-Längsrichtung hintereinander angeordnet sind und dabei aneinander anschließend oder anliegend und/oder in Abständen zueinander.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 37 hintereinander gelegene X-förmige Anordnungen 10-1, 10-2 angeordnet sind, wobei auf beiden Seiten des Kernschicht-Verstärkungsbereichs 37 hintereinander gelegene X-förmige Anordnungen 10-1, 10-2 angeordnet sind. In der Figur 8 ist ein Ausführungsbeispiel dargestellt, bei der an derselben Stelle in der Längsrichtung des Kernschicht-Verstärkungsbereichs 17 und in Bezug auf dieser einander gegenüber liegend jeweils eine X-förmige Anordnung oder ein Paar 10-1, 10-2 von Verstärkungsteilen 10 angeordnet ist. Bei der hierin bezeichneten "X-förmigen" Anordnung von Verstärkungsteilen sind diese insbesondere in der jeweiligen Referenz-Längsrichtung beabstandet voneinander angeordnet, so dass in den Figuren 7 und 8 sowie auch in den Figuen 9, 10a und 10b eine der Verstärkungsvorrichtung des jeweils dargestellten Paars von Verstärkungsvorrichtungen gestrichelt gezeichnet ist, um anzuzeigen, dass sich diese Verstärkungsvorrichtung hinter der jeweiligen Zeichenebene befindet. In der Figur 8 sind die zwei Verstärkungsteile einer X-förmigen Anordnung derselben mit den Bezugszeichen 10e und 10f versehen. In der Darstellung der Figur 8 verläuft die Längsrichtung des Kernschicht-Verstärkungsbereichs 37 vom Betrachter der Figur 8 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 37. Bei dem gezeigten Ausführungsbeispiel durchragen die jeweils am Kernschicht-Verstärkungsbereich 37 gelegenen Enden der Verstärkungsteile einen Bereich des Kernschicht-Verstärkungsbereichs 37. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 37 zugewandten Enden in einem Abstand von maximal der einfachen Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 37 gesehen abwechselnd auf der einen und der dieser gegenüberliegenden anderen Seite des Kernschicht-Verstärkungsbereichs 37 gelegen sein.

Insbesondere bei einer X-förmigen Anordnung von jeweils zwei Verstärkungsteilen kann insbesondere vorgesehen sein, dass die zwei Verstärkungsteile 10 10f aneinander anliegen oder dass die zwei Verstärkungsteiles 10e, 10f an ihren jeweils mittleren Abschnitten miteinander verbunden sind. So kann z. B. eines der Verstärkungsteile 10e, 10f eine Aufnahme wie z. B. eine Bohrung aufweisen, mit der das jeweils zweite Verstärkungsteil aufgenommen wird. Dabei kann die Verbindung der beiden Verstärkungsteile 10e, 10f derart vorgesehen sein, dass diese drehfest miteinander verbunden sind, um insbesondere in der schublast-aufnehmenden Kernschicht 13 auftretende Schubspannungen aufzunehmen und/oder darin auftretende Risse aufzuhalten oder zu verhindern. Die an Hand der Figuren 7 und 8 beschriebenen Ausführungsbeispiele der Erfindung bewirken, dass sich Schäden im Schublastaufnehmende Kernschicht 13, falls diese auf einer ersten der Seiten des Kernschicht-Verstärkungsbereichs 37 auftreten, nicht durch über den Kernschicht-Verstärkungsbereichs 37 zu einer zweiten, der ersten Seite gegenüber liegenden Seite hinüberwandern kann.

Generell können die Anordnung und/oder Gestaltung der Verstärkungs-Vorrichtungen für die verschiedenen Aspekte der Erfindung gleich ausgeführt sein. Generell kann vorgesehen sein, dass zumindest ein Teil der Verstärkungsteile 10; 10a, 10b, 10c, 10d; 10e, 10f und/oder Verstärkungs-Vorrichtungen derart im Kernschicht-Endbereich 56 angeordnet sind, dass deren Enden F1 den inneren Hautabschnitt 11 und/oder den äußeren Hautabschnitt 12 jeweils zumindest teilweise durchragen, wie dies in den Figuren 5a, 5b, 7, 8, 9, 10a, 10b und 11 gezeigt ist. Der innere Hautabschnitt 11 oder 51 (Figuren 6 bis 10) und/oder der äußere Hautabschnitt 12 oder 52 (Figuren 6 bis 10) können jeweils aus mehreren Hautlagen gebildet sein (nicht in den Figuren gezeigt). Dabei kann insbesondere vorgesehen sein, dass zumindest ein Teil der Verstärkungs-Vorrichtungen 10a, 10b, 10c, 10d derart in der Beplankungsschale B angeordnet ist, dass deren Enden F1 den inneren Hautabschnitt 11 bzw. 51 und/oder den äußeren Hautabschnitt 12 bzw. 52 jeweils zumindest teilweise durchragen.

Alternativ oder zusätzlich kann vorgesehen sein, dass mehrere Verstärkungsteile 10; 10a, 10b, 10c, 10d; 10e, 10f den Verstärkungsbereich 37 jeweils zumindest teilweise durchragen. Dabei kann insbesondere vorgesehen sein, dass jeweils ein Ende F2 eines Verstärkungsteils den Verstärkungsbereich 37 durchragt oder in diesen eingesetzt ist (Figuren 4, 5 und 8).

Wie in den Figuren 9, 10a und 10b dargestellt ist, können in der Beplankungsschale B mit oder ohne Verstärkungsbereich 37 entlang einer Referenz-Längsrichtung eine Mehrzahl von Verstärkungsvorrichtungen angeordnet sein, wobei jede Verstärkungsvorrichtung aus eine Gruppe von Verstärkungsteilen 10a, 10b, die insbesondere eine X-förmige Anordnung haben, gebildet sei kann. Dabei kann eine Mehrzahl von X-förmig angeordneten Verstärkungsteil-Paaren in der Referenz-Längsrichtung hintereinander angeordnet sein (Figur 9). Wie diese in der Figur 10a und 10b gezeigt ist, können auch mehrere Reihen von derartige Verstärkungsvorrichtungen 10 angeordnet sein, wobei die Reihen von Verstärkungsvorrichtungen quer zur Referenz-Längsrichtung gesehen nebeneinander angeordnet sind. In der Figur 10b ist gezeigt, dass nebeneinander angeordnete Reihen von Verstärkungsvorrichtungen 10-1, 10-2 diese derart angeordnet ausgeführt sein können, dass sich die Längserstreckung von Verstärkungsteilen, deren Enden aufeinander zulaufen, in der Referenz-Längsrichtung gesehen einander überlappen.

Nach einem Aspekt der Erfindung ist ein Strömungskörper mit einem Strukturbauteil nach einer der beschriebenen Ausführungsformen vorgesehen. Das Strukturbauteil ist nach der Erfindung ein hauptlast-tragendes Strukturteil und somit ist auch die Beplankungsschale wie auch die Rippen-Anordnung eine hauptlast-tragende Strukturteil-Komponente.

Ein weiterer Aspekt der Erfindung bezieht sich auf den sich flächig zwischen Rippen-Anordnungen R erstreckenden Bereich der Beplankungsschale B und wird nachfolgend an Hand der in der Figuren 6a und 6b dargestellten Ausführungsbeispiels beschrieben. Danach ist ein Strukturbauteil 1 eines Strömungskörpers mit zumindest einer Beplankungsschale B zur Bildung einer Strömungsfläche an der Außenseite des Strukturbauteils 1 und einer Trägerstruktur T zur Befestigung der jeweiligen Beplankungsschale B vorgesehen, wobei die Beplankungsschale B- wie voranstehend beschrieben an Hand der Figuren 1 bis 5 beschrieben ist - als Sandwich und aus einem inneren Hautabschnitt 31, einem äußeren Hautabschnitt 32 sowie einer zwischen diesen gelegenen schublastaufnehmende Kernschicht 33 oder einer Schaumschicht gebildet ist, der den inneren und den äußeren Hautabschnitt 31, 32 flächig miteinander verbindet (Figuren 7, 8). Dabei ist die sich zwischen den Trägerbauteilen T und der Rippen-Anordnung R erstreckende und zwischen dem inneren und dem äußeren Hautabschnitt 31, 32 gelegene schublast-aufnehmende Kernschicht 33 aus mehreren in der Längserstreckung der schublast-aufnehmenden Kernschicht 33 oder der Schaumschicht nebeneinander angeordneten schublastaufnehmenden Kernschicht-Abschnitten 33a gebildet. Die schublast-aufnehmenden Kernschicht-Abschnitte 33a sind miteinander jeweils an den einander anliegenden Seiten durch einen Kernschicht-Verstärkungsbereich 37 verbunden, der sich in seiner Längsrichtung L-V (Figuren 6a, 6b) quer zur Längserstreckung der schublastaufnehmende Kernschicht 33 durch diesen hindurch erstreckt.

Der Verlauf der Kernschicht-Verstärkungsbereiche 37 in der Längserstreckung der Beplankungsschale B und somit der Kernschicht-Abschnitte 33a können verschiedenartig vorgesehen sein. Die Kernschicht-Abschnitte 33a entsprechend dem Verlauf der Kernschicht-Verstärkungsbereiche 37 in der Längserstreckung der Beplankungsschale B sind bei der Ausführungsform nach der Figur 6a schachbrettartig und bei der Ausführungsform nach der Figur 6b gegenüber einer Schachbrett-Anordnung in einer Längsrichtung versetzt zueinander angeordnet. Generell verlaufen die Kernschicht-Verstärkungsbereiche 37 in der Längserstreckung der Beplankungsschale B gesehen derart, dass diese auf einen Seitenrand oder auf eine Ecke von quaderförmig vorgesehenen Kernschicht-Abschnitten 33a auftreffen.

Der Kernschicht-Verstärkungsbereich 37 kann dabei zwischen dem inneren Hautabschnitt 31 und dem äußeren Hautabschnitt 32 verlaufen. Dabei kann insbesondere vorgesehen sein, dass der Kernschicht-Verstärkungsbereich 37 mit dem inneren Hautabschnitt 31 und dem äußeren Hautabschnitt 32 verbunden ist, so dass der Kernschicht-Verstärkungsbereich 37 an dem inneren Hautabschnitt 31 und dem äußeren Hautabschnitt 32 befestigt sind. Der Kernschicht-Verstärkungsbereich 37 kann insbesondere aus einem Material gebildet sein, das eine mindestens zweifache Steifigkeit aufweist als der Kernschicht-Verstärkungsbereich 37. Nach einer Ausführungsform der Beplankungsschale B beträgt die Dicke 17a des Kernschicht-Verstärkungsbereichs 37 zwischen dem 0,1- und dem 2,0-fachen der Breite der Beplankungsschale B an dieser Stelle, wobei die Dicke senkrecht zur Längserstreckung der Beplankungsschale gemessen ist.

Der Kernschicht-Verstärkungsbereich 37 kann insbesondere aus Harz gebildet sein. In der Figur 6 ist ein Ausführungsbeispiel des erfindungsgemäßen Strukturbauteils dargestellt, wobei mit gestrichelten Linien die Randlinien der einzelnen schublastaufnehmenden Kernschicht-Abschnitten 33a bzw. der Verlauf der Kernschicht-Verstärkungsbereiche 37 angezeigt sind.

In diesem Zusammenhang kann die Trägerstruktur T insbesondere aus zumindest zwei jeweils entlang einer Längsrichtung L-S des Strukturbauteils 1 verlaufenden Trägerbauteilen 5, 6 (nicht in der Figur 6 gezeigt) und zumindest einer mit der Beplankungsschale B verbundenen Rippen-Anordnung R zur flächigen Abstützung der Beplankungsschale B an der Trägerstruktur T gebildet sein (Figuren 1a, 1b).

Die Rippen-Anordnung R kann insbesondere in Bezug auf ihren Querschnitt T-förmig gestaltet sein. Ein Ausführungsbeispiel einer erfindungsgemäßen Rippen-Anordnung R ist in der Figur 2 dargestellt und weist auf: eine Rippe 21 und ein daran anschließendes Flanschteil 22, das mit einem Oberflächenbereich der Beplankungsschale B verbunden und an diesem befestigt ist. Die Länge des Flanschteils 22 erstreckt sich in einer Rippenanordnungs-Längsrichtung L-R und die Breite des Flanschteils 22 verläuft in einer Rippenanordnungs-Querrichtung Q-R, wobei die Rippe 21 von dem Flanschteil 22 in einer Rippenanordnungs-Breitenrichtung B-R absteht, die senkrecht zu der Rippenanordnungs-Längsrichtung L-R und der Rippenanordnungs-Querrichtung Q-R gerichtet ist (Figur 3).

Die Trägerbauteile 5, 6 können insbesondere nach Ausführungsbeispielen gebildet sein, die an Hand der Figuren 1 und 2 beschrieben worden sind.

In der Ausführungsform des Strukturbauteils nach der Figur 6 sind die Verläufe der Kernschicht-Verstärkungsbereiche 37 derart vorgesehen, dass sich rechteckige Schublastaufnehmende Kernschicht-Abschnitte 33a ergeben. Dabei sind mehrere Kernschicht-Verstärkungsbereiche 37-1, 37-2, 37-3 vorgesehen, die entlang der Rippenanordnungs-Längsrichtung L-R verlaufen. In Bezug auf den Ausdruck "entlang" kann hierbei insbesondere vorgesehen sein, dass zwischen der Orientierung der in der Rippenanordnungs-Längsrichtung L-R verlaufenden Kernschicht-Verstärkungsbereiche 37-1, 37-2, 37-3 eine lokale Winkelabweichung von maximal 30 Grad gegenüber der Orientierung der lokalen Rippenanordnungs-Längsrichtung L-R oder der Längsrichtung der Rippen-Anordnung R auftritt. Die Kernschicht-Verstärkungsbereiche 37 können krummlinig oder geradlinig verlaufen. In der Figur 5 ist die schublast-aufnehmende Kernschicht-Längsrichtung L-V beispielartig nur für einen Kernschicht-Verstärkungsbereich 37 eingetragen. Weiterhin sind quer zu den in der Rippenanordnungs-Längsrichtung L-R verlaufenden Kernschicht-Verstärkungsbereiche 37-1, 37-2, 37-3 verlaufende Kernschicht-Verstärkungsbereiche 37-4 vorgesehen. Somit sind zur Bildung der Beplankungsschale B insbesondere schublastaufnehmende Kernschicht-Abschnitte 33a

Nach einem Ausführungsbeispiel des erfindungsgemäßen Strukturbauteils ist vorgesehen, dass in der schublast-aufnehmenden Kernschicht 33 entlang eines Umgebungsbereichs Z einer Mehrzahl von Kernschicht-Verstärkungsbereichen 37 der Beplankungsschale B erfindungsgemäße Verstärkungs-Vorrichtungen integriert sind (in der Figur 6 ist beispielsweise ein derartiger Umgebungsbereich oder Zwischenbereich mit dem Bezugszeichen Z versehen). Dabei sind die Verstärkungsteile und/oder Verstärkungs-Vorrichtungen 10 in der Längsrichtung L-V des Verstärkungsbereichs oder entlang der Längsrichtung des Zwischenbereichs Z hintereinander angeordnet. Dabei kann in einer sich zwischen jeweils zwei Rippen-Anordnungen R erstreckenden Beplankungsschale B vorgesehen sein, dass entlang und auf beiden Seiten der darin verlaufenden Kernschicht-Verstärkungsbereichen 37 in den schublast-aufnehmende Kernschicht 33 der Beplankungsschale B Verstärkungs-Vorrichtungen 10 integriert sind. Generell kann sich der Umgebungsbereich Z für die Anordnung der Verstärkungs-Vorrichtungen 10 sich entlang von dessen Längserstreckung auf beiden Seiten des Kernschicht-Verstärkungsbereichs 37 und bis zu einer Entfernung von maximal der doppelten Dicke der Beplankungsschale B an der jeweiligen Stelle des Kernschicht-Verstärkungsbereichs 37 erstreckt.

Die Verstärkungsteile und/oder Verstärkungs-Vorrichtungen 10 können zusammen mit dem Kernschicht-Verstärkungsbereich 33 in der Beplankungsschale B integriert sein, wie dies voranstehend an Hand der Figuren 2 und 3 beschrieben ist, so dass für Komponenten ähnlicher Funktion dieselben Bezugszeichen verwendet werden. In den Figuren 6 und 7 sind zwei Ausführungsformen von neben und entlang von Kernschicht-Verstärkungsbereichen 37 angeordneten Verstärkungs-Vorrichtungen 10 dargestellt. Die Ausführungsformen der in den Figuren 7 und 8 dargestellten Verstärkungsvorrichtungen 10 und deren Anordnung sind analog der Verstärkungsvorrichtungen 10 und deren Anordnung ausgeführt, wie sie in den Figuren 2 bzw. 3 dargestellt sind. Die Ausgestaltung und Anordnung der Verstärkungsvorrichtungen 10 oder der Verstärkungsteile kann wie in der an Hand der Figuren 3 und 4 beschriebenen Ausführungsformen vorgesehen sein.

In diesem Zusammenhang kann erfindungsgemäß insbesondere vorgesehen sein, dass mehrere nach einer Ausführungsform der Erfindung ausgeführte und entlang der Verstärkungsbereich -Längsrichtung L-V hintereinander gelegene Verstärkungsteile 10 den Kernschicht-Verstärkungsbereich 37 jeweils durchragen. In der Figur 8 ist ein Ausführungsbeispiel dargestellt, bei der eine Anordnung oder ein Paar von Verstärkungsteilen 10e, 10f in einer X-förmigen Anordnung einen Kernschicht-Verstärkungsbereich 37 durchragen, wobei jeweils ein Mittelabschnitt eines Verstärkungsteils 10 innerhalb des Kernschicht-Verstärkungsbereichs 37 gelegen ist.

Alternativ oder zusätzlich können Verstärkungsteile 10 auch in der Verstärkungsbereich -Längsrichtung L-V gesehen neben dem Kernschicht-Verstärkungsbereich 37 gelegen sein. In den Figuren 7 und 8 sind die zwei Verstärkungsteile einer X-förmigen Anordnung derselben mit den Bezugszeichen 10e und 10f versehen. Insbesondere kann vorgesehen sein, dass eine Mehrzahl von X-förmigen Anordnungen von Verstärkungsteilen 10 in der Längsrichtung des Kernschicht-Verstärkungsbereichs 17 hintereinander angeordnet sind und dabei aneinander anschließend und/oder in Abständen zueinander.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 37 hintereinander gelegene X-förmige Anordnungen 10-1, 10-2 angeordnet sind, wobei auf beiden Seiten des Kernschicht-Verstärkungsbereichs 37 hintereinander gelegene X-förmige Anordnungen 10-1, 10-2 angeordnet sind. In der Figur 8 ist ein Ausführungsbeispiel dargestellt, bei der an derselben Stelle in der Längsrichtung des Kernschicht-Verstärkungsbereichs 37 und in Bezug auf dieser einander gegenüber liegend jeweils eine X-förmige Anordnung oder ein Paar 10-1, 10-2 von Verstärkungsteilen 10 angeordnet ist. In der Figur 8 sind die zwei Verstärkungsteile einer X-förmigen Anordnung derselben mit den Bezugszeichen 10e und 10f versehen. In der Darstellung der Figur 8 verläuft die Längsrichtung L-V des Kernschicht-Verstärkungsbereichs 17 vom Betrachter der Figur 6 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 17. Bei dem gezeigten Ausführungsbeispiel durchragen die jeweils am Kernschicht-Verstärkungsbereich 37 gelegenen Enden der Verstärkungsteile einen Bereich des Kernschicht-Verstärkungsbereichs 37. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 37 zugewandten Enden in einem Abstand von maximal der Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 37 gesehen abwechselnd auf der einen und der dieser gegenüberliegenden anderen Seite des Kernschicht-Verstärkungsbereichs 37 gelegen sein.

Die an Hand der Figuren 7 bis 10b beschriebenen Ausführungsbeispielen der Erfindung bewirken, dass sich Schäden im Schublastaufnehmende Kernschicht 33, falls diese auf einer ersten der Seiten des Kernschicht-Verstärkungsbereichs 37 auftreten, nicht durch über den Kernschicht-Verstärkungsbereichs 37 zu einer zweiten, der ersten Seite gegenüber liegenden Seite hinüberwandern kann.

Ein weiterer Aspekt der Erfindung bezieht sich auf eine hauptlast-tragende Beplankungsschale B für ein Strukturbauteil 1, die in ihrem sich flächig erstreckenden Innenbereich 50 als Sandwich-Bauteil derart gebildet ist, wie dies voranstehend an Hand der Figuren 1 bis 5 und 5 bis 7 beschrieben ist. Dieser Aspekt der Erfindung wird nachfolgend an Hand der Figuren 9 und 10 beschrieben, die im Innenbereich 50 der Beplankungsschale B zeigt: die als Sandwich-Bauteil ausgeführte Beplankungsschale B mit einem inneren Hautabschnitt 51, einem äußeren Hautabschnitt 52 sowie einem zwischen diesen gelegenen schublast-aufnehmende Kernschicht 53, der den inneren 51 und den äußeren 52 Hautabschnitt flächig miteinander verbindet. Die Eigenschaften dieser Strukturkomponenten sind wie vorstehend beschrieben. Bei der Darstellung der Figuren 9 und 10 werden für einige Bestandteile und Komponenten der jeweils dargestellten Ausführungsform dieselben Bezugszeichen wie in vorgehenden Figuren verwendet, wenn auf die jeweiligen Funktionalitäten oder Eigenschaften Bezug genommen wird.

Erfindungsgemäß ist vorgesehen, dass in einem Kernschicht-Endbereich 56 entlang des äußeren Randabschnitts 60 der Beplankungsschale B Verstärkungs-Vorrichtungen 10 integriert sind, die die schublast-aufnehmende Kernschicht 53 durchragen.

Die Verstärkungsvorrichtung kann wie an Hand der Figuren 4 und 5 oder 7 und 8 beschrieben ausgeführt sein. Dabei kann insbesondere eine X-Anordnung von Verstärkungsteilen 10e, 10f verwendet werden. In der Figur 9 sind zwei in der Breitenrichtung B-S des Strukturbauteils 1 hintereinander angeordnete X-Anordnungen 10-1 und 10-2 angeordnet. Generell können in der Breitenrichtung B-S des Strukturbauteils 1 gesehen zumindest ein Verstärkungsteil 10 und insbesondere zumindest eine X-Anordnung von Verstärkungsteilen 10 angeordnet sein. Vorzugsweise sind in der Längsrichtung L-S des Strukturbauteils 1, also entlang des Rands 55 der schublast-aufnehmenden Kernschicht 33 mehrere Verstärkungsvorrichtungen 10 bzw. 10-1 und/oder 10-2 angeordnet.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 17 hintereinander gelegene X-förmige Anordnungen 10-1, 10-2 angeordnet sind, wobei auf beiden Seiten des Kernschicht-Verstärkungsbereichs 17 hintereinander gelegene X-förmige Anordnungen 10-1, 10-2 angeordnet sind. In der Figur 5 ist ein Ausführungsbeispiel dargestellt, bei der an derselben Stelle in der Längsrichtung des Kernschicht-Verstärkungsbereichs 17 und in Bezug auf dieser einander gegenüber liegend jeweils eine X-förmige Anordnung oder ein Paar 10-1, 10-2 von Verstärkungsteilen 10 angeordnet ist. In der Figur 5 sind die zwei Verstärkungsteile einer X-förmigen Anordnung derselben mit den Bezugszeichen 10e und 10f versehen. In der Darstellung der Figur 9 verläuft die Längsrichtung des Kernschicht-Verstärkungsbereichs 17 vom Betrachter der Figur 9 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 17. Bei dem gezeigten Ausführungsbeispiel durchragen die jeweils am Kernschicht-Verstärkungsbereich 17 gelegenen Enden der Verstärkungsteile einen Bereich des Kernschicht-Verstärkungsbereichs 17. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 17 zugewandten Enden in einem Abstand von maximal der Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 17 gesehen abwechselnd auf der einen und der dieser gegenüberliegenden anderen Seite des Kernschicht-Verstärkungsbereichs 17 gelegen sein.

Bei einer X-förmigen Anordnung von jeweils zwei Verstärkungsteilen kann insbesondere vorgesehen sein, dass die zwei Verstärkungsteile 10e, 10f aneinander anliegen oder dass die zwei Verstärkungsteiles 10e, 10f an ihren jeweils mittleren Abschnitten miteinander verbunden sind. So kann z. B. eines der Verstärkungsteile 10e, 10f eine Aufnahme wie z. B. eine Bohrung aufweisen, mit der das jeweils zweite Verstärkungsteil aufgenommen wird. Dabei kann die Verbindung der beiden Verstärkungsteile 10e, 10f derart vorgesehen sein, dass diese drehfest miteinander verbunden sind, um insbesondere in der schublast-aufnehmenden Kernschicht auftretende Schubspannungen aufzunehmen.

Die an Hand der Figuren 3 und 3b, 4b beschriebenen Ausführungsbeispiele der Erfindung bewirken, dass sich Schäden in der schublast-aufnehmenden Kernschicht 13, falls diese auf einer ersten der Seiten des Kernschicht-Verstärkungsbereichs 17 auftreten, nicht durch über den Kernschicht-Verstärkungsbereichs 17 zu einer zweiten, der ersten Seite gegenüber liegenden Seite hinüberwandern kann.

Die Beplankungsschale B nach diesem Aspekt der Erfindung kann insbesondere von einer Trägerstruktur T aufgenommen und an dieser befestigt sein, wie es in den Figuren 1a, 1b und 2 bzw. der Figuren 5a, 5b, 5c dargestellt ist. Bei diesem Aspekt der Erfindung kann insbesondere auch vorgesehen sein, dass sich die Beplankungsschale B zwischen Trägerbauteilen 5, 6 und der Rippen-Anordnung R erstreckt, wie dies an Hand der Figuren 1 a und 1 b voranstehend beschrieben worden ist. Optional kann dabei alternativ oder zusätzlich vorgesehen sein, dass die schublast-aufnehmende Kernschicht 53 aus mehreren in der Längserstreckung der schublast-aufnehmenden Kernschicht 53 nebeneinander angeordneten schublast-aufnehmende Kernschicht-Abschnitten (nicht in der Figur 9 oder 10 gezeigt) gebildet ist, wie dies an Hand der Figuren 3 bis 8 beschrieben worden ist. Die schublast-aufnehmende Kernschicht-Abschnitte sind dabei - wie an Hand der Figur 6 beschrieben - miteinander jeweils an den einander anliegenden Seiten durch einen Kernschicht-Verstärkungsbereich 37 verbunden, der sich in der Längsrichtung L-V des Verstärkungsbereichs (Figur 6) quer zur Längserstreckung der schublast-aufnehmenden Kernschicht 33 bzw. 63 durch diesen hindurch erstreckt.

Erfindungsgemäß kann weiterhin vorgesehen sein, dass von dem Innenbereich 60 aus gesehen vor dem schublast-aufnehmenden kernschichtfreien Anschlussbereich 63 ein Zwischenbereich 62 vorgesehen ist, in dem sich die Dicke der schublastaufnehmenden Kernschicht 53 in Richtung zum Rand 55 kontinuierlich verringert unter Ausbildung eines keilförmigen Abschnitts der monolithischen Zwischenschicht 65 zumindest zwischen der dem äußeren Hautabschnitt 52 zugewandten Seite der schublast-aufnehmenden Kernschicht 53 und dem äußeren Hautabschnitt 52 oder zwischen der dem inneren Hautabschnitt 51 zugewandten Seite der schublastaufnehmenden Kernschicht 53 und dem inneren Hautabschnitt 51. Bei dieser Ausführungsbeispiel kann insbesondere vorgesehen sein, dass in einem Kernschicht-Endbereich 56 entlang des äußeren Randabschnitts 30 der Beplankungsschale B Verstärkungs-Vorrichtungen 10; 10e, 10f nach einem hierin beschriebenen Ausführungsbeispiel integriert sind, die die schublast-aufnehmende Kernschicht und teilweise die beiden keilförmigen Abschnitte der monolithischen Zwischenschicht 65 durchragen.

Der Kernschicht-Endbereich 56 für die Anordnung der Verstärkungs-Vorrichtungen kann sich von dem Rand des Kernschichtendes aus bis zu einer Entfernung von maximal der vierfachen Dicke der Beplankungsschale B am Rand des Kernschichtendes erstreckt.

Generell können die Anordnung und/oder Gestaltung der Verstärkungsteile und/oder Verstärkungs-Vorrichtungen für die verschiedenen Aspekte der Erfindung gleich ausgeführt sein.

## Patentansprüche

1. Hauptlast-tragende Beplankungsschale (B) für ein Strukturbauteil (1), die in ihrem sich flächig erstreckenden Innenbereich (50) als Sandwich-Bauteil und aus einem inneren Hautabschnitt (51), einem äußeren Hautabschnitt (52) sowie einer zwischen diesen gelegenen schublast-aufnehmenden Kernschicht (53) gebildet ist,
wobei die Beplankungsschale (B) zum Anbringen derselben an ein Träger-Bauteil mit einem äußeren Randabschnitt (60) mit einem äußeren Rand (61) und mit einem entlang des Rands (61) verlaufenden Anschlussbereich (63) mit dem inneren Hautabschnitt (51) und dem äußeren Hautabschnitt (52) ausgebildet ist, wobei die schublast-aufnehmenden Kernschicht (53) sich bis vor den äußeren Randabschnitt (60) erstreckt und wobei der Anschlussbereich (63) des äußeren Randabschnitts (60) als entlang des Rands (61) verlaufender kernschichtfreie Anschlussbereich (63) mit dem inneren Hautabschnitt (51) und dem äußeren Hautabschnitt (52) ausgebildet ist, in dem der innere Hautabschnitt (51) und der äußere Hautabschnitt (52) aufeinander liegen,
**dadurch gekennzeichnet,**
**dass** in einem Kernschicht-Endbereich (56) innerhalb des Innenbereichs (50) entlang des äußeren Randabschnitts (60) der Beplankungsschale (B) eine Mehrzahl von Verstärkungs-Vorrichtungen (10; 10a, 10b, 10c, 10d; 10e, 10f) integriert ist, die jeweils zumindest 85 % der schublast-aufnehmenden Kernschicht (53) in deren Dickenrichtung durchragen, um die Rissfestigkeit der Beplankungsschale (B) in dem äußeren Randabschnitt zu verbessern.

2. Hauptlast-tragende Beplankungsschale (B) nach Anspruch 1, **dadurch gekennzeichnet, dass** die Beplankungsschale (B) zum Anbringen derselben an ein Träger-Bauteil mit einem äußeren Randabschnitt (60) mit einem äußeren Rand (61) ausgebildet ist und der aufweist: einen entlang des Rands (61) verlaufenden kernschichtfreien Anschlussbereich (63) mit dem inneren Hautabschnitt (51), dem äußeren Hautabschnitt (52) und einer monolithischen Zwischenschicht (65).

3. Hauptlast-tragende Beplankungsschale (B) nach dem Anspruch 2, **dadurch gekennzeichnet, dass** in dem äußeren Randabschnitt (66) ein Übergangsbereich (67) vorgesehen ist, in dem sich die Dicke der monolithischen Zwischenschicht in Richtung zum äußeren Rand (61) zur Verringerung der Querschnittsdicke der Beplankungsschale verringert.

4. Hauptlast-tragende Beplankungsschale (B) nach dem Anspruch 2 oder 3, **dadurch gekennzeichnet, dass** von dem Innenbereich (50) aus gesehen vor dem kernschichtfreien Anschlussbereich (63) ein Zwischenbereich (62) vorgesehen ist, in dem sich die Dicke der schublastaufnehmenden Kernschicht (53) in Richtung zu dessen Rand (55) kontinuierlich verringert unter Ausbildung eines im Querschnitt gesehen keilförmigen Abschnitts der monolithischen Zwischenschicht zwischen der dem äußeren Hautabschnitt (52) zugewandten Seite der schublastaufnehmenden Kernschicht (53) und dem äußeren Hautabschnitt (53) und/oder zwischen der dem inneren Hautabschnitt (51) zugewandten Seite der schublastaufnehmenden Kernschicht (53) und dem inneren Hautabschnitt (51).

5. Hauptlast-tragende Beplankungsschale (B) nach einem der Ansprüche 1 bis 4, **dadurch gekennzeichnet, dass** die Ausrichtung der Verstärkungsteile (10; 10a, 10b, 10c, 10d; 10e, 10f) derart vorgesehen ist, dass der Winkel zwischen der Längsrichtung des jeweiligen Verstärkungsteils und der Dickenrichtung der Beplankungsschale an dieser Stelle innerhalb eines Bereichs zwischen 45 Grad und 10 Grad liegt.

6. Hauptlast-tragende Beplankungsschale (B) nach einem der Ansprüche 1 bis 5, **dadurch gekennzeichnet, dass** zumindest ein Teil der Verstärkungs-Vorrichtungen (10; 10a, 10b, 10c, 10d; 10e, 10f) derart im Kernschicht-Endbereich (56) angeordnet sind, dass deren Enden (F1) den inneren Hautabschnitt (51) und/oder den äußeren Hautabschnitt (52) jeweils zumindest teilweise durchragen.

7. Hauptlast-tragende Beplankungsschale (B) nach einem der Ansprüche 1 bis 6, **dadurch gekennzeichnet, dass** sich der Kernschicht-Endbereich (56) für die Anordnung der Verstärkungs-Vorrichtungen von dem Rand des Kernschicht-Endes aus bis zu einer Entfernung von maximal der zehnfachen Dicke der Beplankungsschale (B) am Rand des Kernschicht-Endes erstreckt.

8. Hauptlast-tragende Beplankungsschale (B) nach einem der Ansprüche 1 bis 7, **dadurch gekennzeichnet, dass** Verstärkungsteile (10; 10a, 10b, 10c, 10d; 10e, 10f) in der Beplankungsschale (B) in jeweils in einem Volumenteil (V) der Beplankungsschale (B) gelegenen Gruppen von Verstärkungsteilen jeweils als Verstärkungs-Vorrichtungen (10) angeordnet sind, wobei die Volumenteile (V) entlang der Rippen-Längsrichtung (L-R) hintereinander angeordnet sind, wobei jede Gruppe eines Volumenteils (V) jeweils aus einer Kombination von zumindest zwei Verstärkungsteilen (10a, 10b, 10c, 10d; 10e, 10f) gebildet ist, deren Ausrichtungen jeweils maximal 30 Grad von der Dickenrichtung (D-B) der Beplankungsschale (B) abweichen und die in regelmäßiger oder unregelmäßiger Weise um eine Mittelachse des Volumenteils (V) herum angeordnet sind, und
vorzugsweise, dass in dem Kernschicht-Endbereich (56) der Beplankungsschale (B) eine Mehrzahl von Volumenteilen (V) mit einer Gruppe von Verstärkungsteilen (10; 10a, 10b, 10c, 10d; 10e, 10f) entlang zumindest eines Bereichs des äußeren Randabschnitts (60) hintereinander angeordnet ist.

9. Hauptlast-tragende Beplankungsschale (B) nach einem der Ansprüche 7 und 8, **dadurch gekennzeichnet, dass** zumindest ein Teil der Verstärkungs-Vorrichtungen (10) aus Paaren von Verstärkungsteilen (10; 10a, 10b, 10c, 10d; 10e, 10f) gebildet sind, von denen Paare von Verstärkungsteilen in Richtung der Längserstreckung des äußeren Randabschnitts (60) der Beplankungsschale (B) gesehen X-förmig angeordnet sind.

10. Hauptlast-tragende Beplankungsschale (B) nach einem der voranstehenden Ansprüche, **dadurch gekennzeichnet, dass** zumindest ein Teil der Verstärkungsteile (10; 10a, 10b, 10c, 10d; 10e, 10f) nadelförmig gestaltet sind.

11. Hauptlast-tragende Beplankungsschale (B) nach einem der voranstehenden Ansprüche, **dadurch gekennzeichnet, dass** die schublast-aufnehmende Kernschicht (53) in dem Kernschicht-Endbereich (56) aus einem Schaum gebildet ist.

12. Hauptlast-tragende Beplankungsschale (B) nach einem der voranstehenden Ansprüche 1 bis 11, **dadurch gekennzeichnet, dass** die schublastaufnehmende Kernschicht (13) zumindest einen Verstärkungsbereich (37) aufweist, der in entlang des äußeren Randabschnitts (60) der Beplankungsschale (B) verläuft und sich quer zur Längserstreckung der schublast-aufnehmenden Kernschicht (33) durch diese hindurch erstreckt, wobei der Verstärkungsbereich (37) aus einem Material gebildet ist, das eine mindestens zweifache Steifigkeit aufweist als die schublast-aufnehmende Kernschicht (33), und
vorzugsweise, dass die schublast-aufnehmende Kernschicht aus plattenförmigen Kernschicht-Abschnitten gebildet ist und der Verstärkungsbereich zwischen den Kernschicht-Abschnitten zur Verbindung derselben verläuft, und
weiter vorzugsweise, dass der Verstärkungsbereich (37) aus Harz gebildet und insbesondere zur Verbindung von Abschnitten der schublast-aufnehmende Kernschicht (33) in der Beplankungsschale (B) vorgesehen ist, und
noch weiter vorzugsweise, dass mehrere Verstärkungsteile (10; 10a, 10b, 10c, 10d; 10e, 10f) den Verstärkungsbereich (37) jeweils zumindest teilweise durchragen, und
noch weiter vorzugsweise, dass Verstärkungsteile (10; 10a, 10b, 10c, 10d; 10e, 10f) mit einem Ende in den Verstärkungsbereich (37) eingesetzt sind und sich mit ihrem übrigen Bereich in der schublast-aufnehmende Kernschicht (33) erstrecken.

13. Strukturbauteil mit einer hauptlast-tragenden Beplankungsschale (B) nach einem der voranstehenden Ansprüche, **dadurch gekennzeichnet, dass** das Strukturbauteil zusätzlich nach einem der voranstehenden Ansprüche 6 bis 12 gebildet ist.

14. Strömungskörper mit einem Strukturbauteil nach dem Anspruch 13.

## Claims

1. A main load-bearing planking shell (B) for a structural component (1), which in its inner area (50), which extends planar, is formed as a sandwich component and is formed from an inner skin section (51), an outer skin section (52) and a shear load-absorbing core layer (53) lying between them,
wherein the planking shell (B) is formed, for the purpose of attaching said shell to a support component, with an outer edge section (60) with an outer edge (61) and with a connection area (63) extending along the edge (61) which comprises the inner skin section (51) and the outer skin section (52), wherein the shear load-absorbing core layer (53) extends to in front of the outer edge section (60) and wherein the connection area (63) of the outer edge section (60) is formed as a core layer-free connection area (63) extending along the edge (61) which comprises the inner skin section (51) and the outer skin section (52), in which the inner skin section (51) and the outer skin section (52) lie on one another,
**characterized in that**
a plurality of reinforcing devices (10; 10a, 10b, 10c, 10d; 10e, 10f) are integrated in a core layer end area (56) inside the inner area (50) along the outer edge section (60) of the planking shell (B), which reinforcing devices each project through at least 85 % of the shear load-absorbing core layer (53) in the thickness direction thereof in order to improve the crack resistance of the planking shell (B) in the outer edge section.

2. The main load-bearing planking shell (B) according to Claim 1, **characterized in that** the planking shell (B) is formed, for the purpose of attaching said shell to a support component, with an outer edge section (60) with an outer edge (61) and which has: a core layer-free connection area (63) extending along the edge (61) which comprises the inner skin section (51), the outer skin section (52) and a monolithic intermediate layer (65).

3. The main load-bearing planking shell (B) according to Claim 2, **characterized in that** a transition area (67) is provided in the outer edge section (66), in which the thickness of the monolithic intermediate layer decreases in the direction of the outer edge (61) in order to decrease the cross-sectional thickness of the planking shell.

4. The main load-bearing planking shell (B) according to Claim 2 or 3, **characterized in that**, an intermediate area (62) is provided in front of the core layer-free connection area (63) viewed from the inner area (50), in which intermediate area the thickness of the shear load-absorbing core layer (53) decreases continuously in the direction of its edge (55) while forming a section of the monolithic intermediate layer which is tapered when viewed in cross-section between the side of the shear load-absorbing core layer (53) facing the outer skin section (52) and the outer skin section (53) and/or between the side of the shear load-absorbing core layer (53) facing the inner skin section (51) and the inner skin section (51).

5. The main load-bearing planking shell (B) according to one of Claims 1 through 4, **characterized in that** the reinforcing parts (10; 10a, 10b, 10c, 10d; 10e, 10f) are aligned such that the angle between the longitudinal direction of the respective reinforcing part and the thickness direction of the planking shell at this location lies within a range from 45 degrees to 10 degrees.

6. The main load-bearing planking shell (B) according to one of Claims 1 through 5, **characterized in that** at least a portion of the reinforcing devices (10; 10a, 10b, 10c, 10d; 10e, 10f) is arranged in the core layer end area (56) in such a way that each of their ends (F1) at least partially projects through the inner skin section (51) and/or the outer skin section (52).

7. The main load-bearing planking shell (B) according to one of Claims 1 through 6, **characterized in that** the core layer end area (56) for arrangement of the reinforcing devices, extends from the edge of the core layer end out to a distance of at most ten times the thickness of the planking shell (B) at the edge of the core layer end.

8. The main load-bearing planking shell (B) according to one of Claims 1 through 7, **characterized in that** reinforcing parts (10; 10a, 10b, 10c, 10d; 10e, 10f) in the planking shell (B) are arranged in groups of reinforcing parts laid in a volume part (V) of the planking shell (B) as reinforcing devices (10), wherein the volume parts (V) are arranged consecutively along the rib longitudinal direction (LR), wherein each group of a volume part (V) is formed by a combination of at least two reinforcing parts (10a, 10b, 10c, 10d; 10e, 10f), the alignment of which deviates by at most 30 degrees from the thickness direction (D-B) of the planking shell (B) and which are arranged in a regular or irregular manner around a central axis of the volume part (V), and
preferably **in that**, in the core layer end area (56) of the planking shell (B), a plurality of volume parts (V) with a group of reinforcing parts (10; 10a, 10b, 10c, 10d; 10e, 10f) is arranged consecutively along at least one area of the outer edge section (60).

9. The main load-bearing planking shell (B) according to one of Claims 7 and 8, **characterized in that** at least a portion of the reinforcing devices (10) is formed by pairs of reinforcing parts (10; 10a, 10b, 10c, 10d; 10e, 10f), of which pairs of reinforcing parts are arranged in an X-shape viewed in the direction of the longitudinal extension of the outer edge section (60) of the planking shell (B).

10. The main load-bearing planking shell (B) according to one of the preceding claims, **characterized in that** at least a portion of the reinforcing parts (10; 10a, 10b, 10c, 10d; 10e, 10f) is designed needle-shaped.

11. The main load-bearing planking shell (B) according to one of the preceding claims, **characterized in that** the shear load-absorbing core layer (53) in the core layer end area (56) is formed by a foam.

12. The main load-bearing planking shell (B) according to one of the preceding Claims 1 through 11, **characterized in that** the shear load-absorbing core layer (13) has at least one reinforcing area (37), which extends along the outer edge section (60) of the planking shell (B) and extends transverse to the longitudinal extension of the shear load-absorbing core layer (33) and through same, wherein the reinforcing area (37) is formed from a material which has at least double the stiffness of the shear load-absorbing core layer (33), and
preferably **in that** the shear load-absorbing core layer is formed by plate-shaped core layer sections and the reinforcing area extends between the core layer sections in order to connect same, and
more preferably **in that** the reinforcing area (37) is formed from resin and in particular is provided in particular for connecting sections of the shear load-absorbing core layer (33) in the planking shell (B), and
still more preferably **in that** several reinforcing parts (10; 10a, 10b, 10c, 10d; 10e, 10f) each project at least partially through the reinforcing area (37), and
still more preferably **in that** reinforcing parts (10; 10a, 10b, 10c, 10d; 10e, 10f) are inserted by means of one end into the reinforcing area (37) and the remaining area thereof extends in the shear load-absorbing core layer (33).

13. A structural component with a main load-bearing planking shell (B) according to one of the preceding claims, **characterized in that** the structural component is additionally formed according to one of the preceding Claims 6 through 12.

14. A flow body with a structural component according to Claim 13.

## Revendications

1. Enveloppe de revêtement (B) porteuse de charge principale pour un élément structural (1) qui est formée dans sa zone intérieure (50) s'étendant à plat comme un élément structural en sandwich et à partir d'une partie de revêtement intérieure (51), d'une partie de revêtement extérieure (52) et d'une couche centrale (53) de réception de charge de poussée disposée entre celles-ci, l'enveloppe de revêtement (B) étant conçue pour fixer celle-ci sur un élément structural porteur ayant une partie marginale extérieure (60) ayant un bord extérieur (61) et ayant une zone de raccordement (63) s'étendant le long du bord (61) avec la partie de revêtement intérieure (51) et la partie de revêtement extérieure (53), la couche centrale (53) de réception de charge de poussée s'étendant jusqu'à la partie marginale extérieure (60) et la zone de raccordement (63) de la partie marginale extérieure (60) étant conçue comme la zone de raccordement (63) exempte de couche centrale s'étendant le long du bord (61) avec la partie de revêtement intérieure (51) et la partie de revêtement extérieure (52), dans laquelle la partie de revêtement intérieure (51) et la partie de revêtement extérieure (52) se superposent, **caractérisée en ce que** dans une zone d'extrémité (56) de la couche centrale à l'intérieur de la zone intérieure (50) le long de la partie marginale extérieure (60) de l'enveloppe de revêtement (B) est intégrée une pluralité de dispositifs de renforcement (10, 10a, 10b, 10c, 10d, 10e, 10f) qui traversent respectivement d'au moins 85 % la couche centrale (53) de réception de charge de poussée afin d'améliorer la résistance à la fissuration de l'enveloppe de revêtement (B) dans la partie marginale extérieure.

2. Enveloppe de revêtement (B) porteuse de charge principale selon la revendication 1, **caractérisée en ce que** l'enveloppe de revêtement (B) destinée à fixer cette dernière sur un élément structural porteur est conçue avec une partie marginale extérieure (60) ayant un bord extérieur (61) et qui présente : une zone de raccordement (63) exempte de couche centrale s'étendant le long du bord (61) ayant la partie de revêtement intérieure (51), la partie de revêtement extérieure (52) et une couche intermédiaire (65) monolithique.

3. Enveloppe de revêtement (B) porteuse de charge principale selon la revendication 2, **caractérisée en ce que** dans la partie marginale extérieure (66) est disposée une zone de transition (67) dans laquelle l'épaisseur de la couche intermédiaire monolithique diminue en direction du bord extérieur (61) afin de réduire l'épaisseur en section transversale de l'enveloppe de revêtement.

4. Enveloppe de revêtement (B) porteuse de charge principale selon la revendication 2 ou la revendication 3, **caractérisée en ce que**, lorsqu'on observe depuis la zone intérieure (50) avant la zone de raccordement (63) exempte de couche centrale, est disposée une zone intermédiaire (62) dans laquelle l'épaisseur de la couche centrale (53) de réception de charge de poussée dans la direction de son bord (55) diminue en continue en formant une partie cunéiforme, lorsqu'on observe en section transversale, de la couche intermédiaire monolithique entre la face orientée vers la partie de revêtement extérieure (52) de la couche centrale (53) de réception de la charge de poussée et la partie de revêtement extérieure (53) et/ou entre la face de la couche centrale (53) orientée vers la partie de revêtement intérieure (51) et la partie de revêtement intérieure (51).

5. Enveloppe de revêtement (B) porteuse de charge principale selon l'une quelconque des revendications 1 à 4, **caractérisée en ce que** l'orientation des parties de renforcement (10, 10a, 10b, 10c, 10d, 10e, 10f) est prévue de telle sorte que l'angle entre la direction longitudinale de chaque partie de renforcement et la direction d'épaisseur de l'enveloppe de revêtement à cet endroit à l'intérieur d'une zone soit comprise entre 45 degrés et 10 degrés.

6. Enveloppe de revêtement (B) porteuse de charge principale selon l'une quelconque des revendications 1 à 5, **caractérisée en ce qu'**au moins une partie des dispositifs de renforcement (10, 10a, 10b, 10c, 10d, 10e, 10f) sont disposés dans la zone d'extrémité (56) de couche centrale de telle sorte que ses extrémités (F1) traversent au moins partiellement respectivement la partie de revêtement intérieure (51) et/ou la partie de revêtement extérieure (52).

7. Enveloppe de revêtement (B) porteuse de charge principale selon l'une quelconque des revendications 1 à 6, **caractérisée en ce que** la partie d'extrémité (56) de couche centrale pour la mise en place des dispositifs de renforcement s'étend à partir du bord de l'extrémité de couche centrale jusqu'à une distance maximum équivalente à dix fois l'épaisseur de l'enveloppe de revêtement (B) sur le bord de l'extrémité de couche centrale.

8. Enveloppe de revêtement (B) porteuse de charge principale selon l'une quelconque des revendications 1 à 7, **caractérisée en ce que** les parties de renforcement (10, 10a, 10b, 10c, 10d, 10e, 10f) dans l'enveloppe de revêtement (B) dans respectivement des groupes de parties de renforcement disposés dans une partie de volume (V) de l'enveloppe de revêtement (B) sont disposées respectivement en tant que dispositifs de renforcement (10), les parties de volume (V) étant disposées les unes derrière les autres le long de la direction longitudinale (LR) des rainures, chaque groupe d'une partie de volume (V) étant formé respectivement à partir d'une combinaison d'au moins deux parties de renforcement (10a, 10b, 10c, 10d, 10e, 10f), dont les orientations respectivement s'écartent au maximum de 30 degrés de la direction d'épaisseur (D-B) de l'enveloppe de revêtement (B) et sont aménagées d'une manière régulière ou irrégulière autour d'un axe central de la partie de volume (V), et de préférence **en ce que** dans la zone d'extrémité (56) de couche centrale de l'enveloppe de revêtement (B) est disposée une pluralité de parties de volume (V) les unes derrière les autres ayant un groupe de parties de renforcement ((10, 10a, 10b, 10c, 10d, 10e, 10f) le long au moins d'une zone de la partie marginale extérieure (60).

9. Enveloppe de revêtement (B) porteuse de charge principale selon l'une quelconque des revendications 7 et 8, **caractérisée en ce qu'**au moins une partie des dispositifs de renforcement (10) sont formées à partir de paires de parties de renforcement (10a, 10b, 10c, 10d, 10e, 10f), parmi lesquelles des paires de parties de renforcement sont disposées en X lorsqu'elles sont observées dans la direction de l'étendue longitudinale de la partie marginale extérieure (60) de l'enveloppe de revêtement (B).

10. Enveloppe de revêtement (B) porteuse de charge principale selon l'une quelconque des revendications précédentes, **caractérisée en ce qu'**au moins une partie des parties de renforcement (10; 10a, 10b, 10c, 10d; 10e, 10f) prennent la forme d'aiguille.

11. Enveloppe de revêtement (B) porteuse de charge principale selon l'une quelconque des revendications précédentes, **caractérisée en ce que** la couche principale (53) de réception de charge de poussée est constituée de mousse dans la zone marginale (56) de couche centrale.

12. Enveloppe de revêtement (B) porteuse de charge principale selon l'une quelconque des revendications 1 à 11, **caractérisée en ce que** la couche centrale (13) de réception de charge de poussée présente au moins une zone de renforcement (37) qui s'étend dans l'enveloppe de revêtement (B) le long de la partie marginale extérieure (60) et qui s'étend transversalement par rapport à l'étendue longitudinale de la couche centrale (33) de réception de charge de poussée en la traversant, la zone de renforcement (37) étant constituée d'un matériau qui présente au moins une rigidité double par rapport à la couche centrale (33) de réception de charge de poussée, et de préférence, **en ce que** la couche centrale de réception de charge de poussée est constituée de parties de couche centrale tabulaires et **en ce que** la zone de renforcement s'étend entre les parties de couche centrale pour les relier, et de préférence encore, **en ce que** la zone de renforcement (37) est constituée de résine et qu'elle est disposée notamment pour relier des parties de la couche centrale (33) de réception de charge de poussée dans l'enveloppe de revêtement (B), et mieux encore, **en ce que** plusieurs parties de renforcement (10; 10a, 10b, 10c, 10d; 10e, 10f) traversent la zone de renforcement (37) respectivement au moins à certains endroits, et mieux encore, **en ce que** les parties de renforcement (10; 10a, 10b, 10c, 10d; 10e, 10f) ayant une extrémité sont insérées dans la zone de renforcement (37) et s'étendent avec leur zone restante dans la couche centrale (33) de réception de charge de poussée.

13. Élément structural comprenant une enveloppe de revêtement (B) porteuse de charge principale selon l'une quelconque des revendications précédentes, **caractérisée en ce que** l'élément structural est conçu en outre selon l'une quelconque des revendications précédentes 6 à 12.

14. Corps d'écoulement comprenant un élément structural selon la revendication 13.
